# EUROPEAN PATENT SPECIFICATION

(11) **EP 4 312 089 B1**
(45) Date of publication and mention of the grant of the patent: **15.04.2026**
(21) Application number: 23186322.6
(22) Date of filing: 19.07.2023
(51) Int. Cl.: G05B 13/02, G05B 19/418

(54) **APPARATUSES, COMPUTER-IMPLEMENTED METHODS, AND COMPUTER PROGRAM PRODUCTS FOR DUAL-HORIZON OPTIMIZATION OF A PROCESSING PLANT**
VORRICHTUNGEN, COMPUTERIMPLEMENTIERTE VERFAHREN UND COMPUTERPROGRAMMPRODUKTE ZUR DUAL-HORIZON-OPTIMIERUNG EINER VERARBEITUNGSANLAGE
APPAREILS, PROCÉDÉS MIS EN UVRE PAR ORDINATEUR ET PRODUITS DE PROGRAMME INFORMATIQUE POUR L'OPTIMISATION À DEUX HORIZONS D'UNE INSTALLATION DE TRAITEMENT

(30) Priority: 30.07.2022 US 202263369938 P; 15.03.2023 US 202318184286
(43) Date of publication of application: 31.01.2024
(73) Proprietor: HONEYWELL INTERNATIONAL INC., Charlotte, NC 28202 (US)
(72) Inventor: LU, Joseph Z., Charlotte 28202 (US); JECH, Jan, Charlotte 28202 (US)
(74) Representative: Haseltine Lake Kempner LLP

(56) References cited:
- CASTILLO-CASTILLO PEDRO A ET AL: "Inventory pinch gasoline blend scheduling algorithm combining discrete- and continuous-time models", COMPUTERS & CHEMICAL ENGINEERING, PERGAMON PRESS, OXFORD, GB, vol. 84, 18 August 2015 (2015-08-18), pages 611 - 626, XP029308601, ISSN: 0098-1354, DOI: 10.1016/J.COMPCHEMENG.2015.08.005
- PANDA DEBASHISH ET AL: "Discrete time reactive scheduling of gasoline blending and product delivery in presence of demand and component uncertainties using graphical genetic algorithm", COMPUTERS & CHEMICAL ENGINEERING, PERGAMON PRESS, OXFORD, GB, vol. 143, 20 September 2020 (2020-09-20), XP086330822, ISSN: 0098-1354, [retrieved on 20200920], DOI: 10.1016/J.COMPCHEMENG.2020.107100

## Description

### TECHNOLOGICAL FIELD

Embodiments of the present disclosure generally relate to optimizing performance of a processing plant such as an oil refinery, and specifically to optimizing performance of a processing based on multiple time horizons-including a long-horizon optimization and a short-horizon optimization.

### BACKGROUND

Oil refineries and other processing plants are subject to various sources of disturbances that affect the performance of the refinery. In certain contexts, demand fluctuations become a significant source of disturbance, which occur regardless of whether particular production rates are scheduled or not. It is desirable to optimize the operation of the processing plant regardless to attempt to maximize or minimize particular key performance indicators, such as profitability of the plant.

Applicant has discovered problems with current implementations of optimizing performance of a processing plant. Through applied effort, ingenuity, and innovation, Applicant has solved many of these identified problems by developing embodied in the present disclosure, which are described in detail below.

CASTILLO-CASTILLO PEDRO A ET AL: "Inventory pinch gasoline blend scheduling algorithm combining discrete- and continuous-time models", COMPUTERS & CHEMICAL ENGINEERING, PERGAMON PRESS, OXFORD, GB, vol. 84, 18 August 2015 (2015-08-18), pages 611-626, ISSN: 0098-1354, DOI: 10.1016/J. COMPCHEMENG.2015.08.005 discloses a multi-period inventory pinch based algorithm to solve continuous-time scheduling models (MPIP-C algorithm), a three level method which combines discrete-time approximate scheduling with continuous-time detailed scheduling and with inventory pinch-based optimization of operating states. When applied to gasoline blending, the top level computes optimal recipes for aggregated blends over periods initially delineated by inventory pinch points. Discrete-time middle level uses fixed blend recipes to compute an approximate schedule, i.e. what, when, and how much to produce; it also allocates swing storage and associated product shipments with specific storage. Continuous-time model at the third level computes when exactly to start/stop an operation (blend, tank transfer. shipment). MPIP-C algorithm solves linear or nonlinear problems 2-3 orders of magnitude faster than full space models.

### BRIEF SUMMARY

In general, embodiments of the present disclosure are provided for optimizing operation of a refinery plant using a dual-horizon optimization process. The present invention is defined in the independent claims, to which reference should now be made. Advantageous features are set out in the sub claims. Other implementations for using a dual-horizon optimization process will be, or will become, apparent to one with skill in the art upon examination of the following figures and detailed description. It is intended that all such additional implementations be included within this description be within the scope of the disclosure, and be protected by the following claims.

In accordance with a first aspect of the disclosure, a computer-implemented method for generating at least one optimized operational parameter associated with a processing plant utilizing a dual-horizon optimization process is provided. The computer-implemented method is performable via any of a myriad of computing device(s) embodied in hardware, software, firmware, and/or a combination thereof, as described herein, including at least one processor in communication with at least one memory. One example computer-implemented method includes identifying a long-horizon optimized plan. The example computer-implemented method further includes determining plant configuration result data indicating whether a number of blenders associated with the processing plant is greater than or equal to a number of concurrent products. The example computer-implemented method further includes generating the at least one optimized operational parameter using a short-horizon optimization process based at least in part on the long-horizon optimized plan and the plant configuration result data.

In some embodiments of the example computer-implemented method, the plant configuration result data indicates that the number of blenders is greater than or equal to the number of concurrent products, and generating the at least one optimized operational parameter includes applying at least one value of the long-horizon optimized plan as the at least one optimized operational parameter to control at least one physical component of the processing plant, or applying the at least one value of the long-horizon optimized plan as the at least one optimized operational parameter to set at least one ideal resting value.

In some such embodiments of the example computer-implemented method, the example computer-implemented method further includes setting at least one blender outlet target flowrate to an average product run rate determined from the long-horizon optimized plan.

In some embodiments of the example computer-implemented method, the plant configuration result data indicates that the number of blenders is determined not greater than the number of concurrent products and where the plant configuration result data indicates that the number of blenders is equivalent to a number of primary products, where generating the optimal operational parameters includes, for each secondary product of at least one secondary product, assigning a closest primary product associated with the secondary product, and identifying a short-horizon optimized plan that represents a change from the closest primary product to the secondary product as a specification disturbance.

In some embodiments of the example computer-implemented method, the plant configuration result data indicates that the number of blenders is determined not greater than or equal to the number of concurrent products, and where the plant configuration results indicates that the number of blenders is less than a number of primary products, and where the plant configuration results indicates that the processing plant is not agile, and where generating the at least one optimal operational parameter includes setting at least one first ideal resting value for at least one product run rate of at least one blender based at least in part on at least one demand rate of the long-horizon optimized plan, setting at least one second ideal resting value for at least one process unit based at least in part on at least one unit target represented in the long-horizon optimized plan, and setting at least one third ideal resting value for at least one blender recipe based at least in part on at least one aggregate blend recipe represented in the long-horizon optimized plan.

In some embodiments of the example computer-implemented method, the plant configuration result data indicates that the number of blenders is determined not greater than the number of concurrent products, where the plant configuration results indicates that the number of blenders is less than a number of primary products, where the plant configuration results indicates that the processing plant is agile and that the processing plant is configured where changing product or changing run-rate does not impact optimization of a target parameter, and where generating the at least one optimized operational parameter includes identifying a short-horizon optimized plan using the short-horizon optimized plan that does not utilize the long-horizon optimized plan, and determining the at least one optimized operational parameter from the short-horizon optimized plan.

In some embodiments of the example computer-implemented method, the plant configuration result data indicates that the number of blenders is determined not greater than the number of concurrent products, where the plant configuration result data indicates that the number of blenders is less than a number of primary products, where the plant configuration result data indicates that the processing plant is agile and that the processing plant is configured where changing product or changing run-rate does impact optimization of a target parameter, and where generating the at least one optimized operational parameter includes generating a short-horizon optimized plan including at least one anchoring point based at least in part on the long-horizon optimized plan, and including at least one ideal resting value in the short-horizon optimized plan based at least in part on the long-horizon optimized plan.

In some embodiments of the example computer-implemented method, the example computer-implemented method further includes generating improvement data associated with an estimated long-horizon optimized plan representing operation of the processing plant with addition of at least one new blender. In some such embodiments of the example computer-implemented method, the example computer-implemented method further includes determining that the improvement data satisfies an improvement threshold, and generating an indication that the improvement data satisfies the improvement threshold.

In some embodiments of the example computer-implemented method, the processing plant includes at least one rundown blender and at least one batch blender, where the at least one optimized operational parameter is utilized to control the at least one rundown blender, and where the computer-implemented method further includes generating, using a different optimization process, at least one second optimized operational parameter utilized to control the at least one batch blender.

In some embodiments of the example computer-implemented method, the example computer-implemented method further includes identifying a data identifier that represents a particular value for the plant configuration result data, where the particular value indicates whether the processing plant (1) indicates that the number of blenders is greater than or equal to the number of concurrent products, (2) indicates that the number of blenders is determined not greater than the number of concurrent products and indicates that the number of blenders is equivalent to a number of primary products, (3) indicates that the number of blenders is determined not greater than or equal to the number of concurrent products, indicates that the number of blenders is less than a number of primary products, and indicates that the refinery plant is not agile, (4) indicates that the number of blenders is determined not greater than the number of concurrent products, indicates that the number of blenders is less than a number of primary products, indicates that the processing plant is agile, and indicates that the processing plant is configured where changing product or changing run-rate does not impact optimization of a target parameter, or (5) indicates that the number of blenders is determined not greater than the number of concurrent products, indicates that the number of blenders is less than a number of primary products, indicates that the processing plant is agile, and indicates that the processing plant is configured where changing product or changing run-rate does impact optimization of a target parameter, where generating the at least one optimized operational parameter is based at least in part on the short-horizon optimization process corresponding to the data identifier.

In some embodiments of the example computer-implemented method, the example computer-implemented method further includes identifying a data identifier from a set of candidate data identifiers, where the data identifier represents at least one plant characteristic associated with the processing plant, where the plant characteristic at least indicates whether the processing plant includes the number of blenders that is greater than or equal to the number of concurrent products, where the apparatus generates the at least one optimized operational parameter utilizing the short-horizon optimization process corresponding to the data identifier.

In some embodiments of the example computer-implemented method, the number of blenders represents a number of physical blenders in the processing plant.

In some embodiments of the example computer-implemented method, the number of blenders represents a number of virtual blenders associated with the processing plant.

In some embodiments of the example computer-implemented method, the example computer-implemented method further includes causing configuration of a lift schedule based at least in part on the at least one optimized operational parameter.

In accordance with a second aspect of the disclosure, an apparatus for generating at least one optimized operational parameter associated with a processing plant utilizing a dual-horizon optimization process is provided. In one example embodiment the example apparatus includes at least one processor and at least one non-transitory memory having computer-coded instructions thereon. The computer-coded instructions in execution with the at least one processor cause the apparatus to perform any one of the example computer-implemented methods described herein. In another example embodiment the example apparatus includes means for performing each step of any one of the example computer-implemented methods described herein.

In accordance with a third aspect of the disclosure, a computer program product for generating at least one optimized operational parameter associated with a processing plant utilizing a dual-horizon optimization process is provided. In one example embodiment the example computer program product includes at least one non-transitory computer-readable storage medium having computer program code thereon that, in execution with at least one processor, configures the computer program product for performing any one of the example computer-implemented methods described herein.

### BRIEF DESCRIPTION OF THE DRAWINGS

Having thus described the embodiments of the disclosure in general terms, reference now will be made to the accompanying drawings, which are not necessarily drawn to scale, and wherein:
FIG. 1 illustrates a block diagram of a system that may be specially configured within which embodiments of the present disclosure may operate;
FIG. 2 illustrates a block diagram of an example apparatus that may be specially configured in accordance with an example embodiment of the present disclosure;
FIG. 3 illustrates a flowsheet model of a physical layout of an example processing plant in accordance with at least an example embodiment of the present disclosure;
FIG. 4 illustrates a flowsheet model of an example processing plant virtualized for optimization in accordance with at least an example embodiment of the present disclosure;
FIG. 5 illustrates a visualization of a long-horizon optimization and a short-horizon optimization in a dual-horizon optimization process in accordance with at least an example embodiment of the present disclosure;
FIG. 6 illustrates an example visualization of lift schedule generation based at least in part on dual-horizon optimization in accordance with at least an example embodiment of the present disclosure;
FIG. 7 illustrates an example data flow for dual-horizon optimization in accordance with at least an example embodiment of the present disclosure;
FIG. 8 illustrates an example decision tree for identifying a short-horizon optimization process for use in accordance with at least an example embodiment of the present disclosure;
FIG. 9 illustrates a data flow for configuring operation of a physical component in accordance with at least one example embodiment of the present disclosure;
FIG. 10 illustrates a flowchart including operations of an example process for generating optimized operational parameter(s) using a dual-horizon optimization process in accordance with at least an example embodiment of the present disclosure;
FIG. 11 illustrates a flowchart including operations of an example process for generating an indication of a recommended plant improvement, for example as part of an example process for generating optimized operational parameter(s) using a dual-horizon optimization process in accordance with at least an example embodiment of the present disclosure;
FIG. 12 illustrates a flowchart including operations of an example process for determining a short-horizon optimization process for use, for example as part of an example process for generating optimized operational parameter(s) using a dual-horizon optimization process in accordance with at least an example embodiment of the present disclosure;
FIG. 13 illustrates a flowchart including operations of an example process for generating optimized operational parameter(s) using a first short-horizon optimization process, for example as part of an example process for generating optimized operational parameter(s) using a dual-horizon optimization process in accordance with at least an example embodiment of the present disclosure,
FIG. 14 illustrates a flowchart including operations of an example process for generating optimized operational parameter(s) using a second short-horizon optimization process, for example as part of an example process for generating optimized operational parameter(s) using a dual-horizon optimization process in accordance with at least an example embodiment of the present disclosure;
FIG. 15 illustrates a flowchart including operations of an example process for generating optimized operational parameter(s) using a third short-horizon optimization process, for example as part of an example process for generating optimized operational parameter(s) using a dual-horizon optimization process in accordance with at least an example embodiment of the present disclosure;
FIG. 16 illustrates a flowchart including operations of an example process for generating optimized operational parameter(s) using a fourth short-horizon optimization process, for example as part of an example process for generating optimized operational parameter(s) using a dual-horizon optimization process in accordance with at least an example embodiment of the present disclosure; and
FIG. 17 illustrates a flowchart including operations of an example process for generating optimized operational parameter(s) using a fifth short-horizon optimization process, for example as part of an example process for generating optimized operational parameter(s) using a dual-horizon optimization process in accordance with at least an example embodiment of the present disclosure.

### DETAILED DESCRIPTION

Embodiments of the present disclosure now will be described more fully hereinafter with reference to the accompanying drawings, in which some, but not all, embodiments of the disclosure are shown. Indeed, embodiments of the disclosure may be embodied in many different forms and should not be construed as limited to the embodiments set forth herein, rather, these embodiments are provided so that this disclosure will satisfy applicable legal requirements. Like numbers refer to like elements throughout.

### Overview

Often, attempts to optimize operation of a refinery plant (or other processing plant) may suffer from any number of disturbances. Such disturbances include demand fluctuations, unit upsets, crude feed changes, and the like, which can cause significant disturbances in processing plants. Such disturbances can enter from the supply side and/or can enter through other intermediate entryways, and/or can source from a processing unit and upset the operation in a similar manner than the demand side disturbances. These disturbances can cause inventory shortfalls or surpluses which can normally be absorbed by component tanks, but for refineries that do not have component inventory storage capacities, conventional optimization approaches often are insufficient as failing to optimally account for the component inventory imbalances resulted from such disturbances.

The inventors have identified that rejecting demand fluctuations before allowing them to enter the processing plant is preferable. In other words, such demand fluctuations should be maximally absorbed or otherwise rejected by product tank inventory capacities, if possible. Again, conventional optimization process(es) fail to achieve such optimizations. Furthermore, the disturbance rejection from the demand side is optimally coordinated with the tasks of rejecting the disturbances from feed side and from the mid entryways-which is accomplishable utilizing a dual-horizon optimization process for plantwide optimization.

Embodiments of the present disclosure utilize dual-horizon optimization that optimizes operation of a processing plant in an improved manner. The dual-horizon optimization process provides a long-horizon optimized plan that balances supply-and-demand dynamics of products produced via the processing plant while rejecting disturbances from external or internal sources. The long-horizon optimization process guides a short-horizon optimization process that produces a short-horizon optimized plan that minimizes the impact of particular disturbances, for example demand fluctuations, supply fluctuations, and/or unit upsets, on a particular control target or target parameter. In one example context, for example where the dual-horizon optimization process maximizes a target parameter of profitability, the short-horizon optimization process minimizes the impact of such disturbances on the profitability of the processing plant as a whole.

Such dual-horizon optimization process(es) are advantageous for use in multiple configurations of processing plants. A dual-horizon optimization process is particularly advantageous is particularly advantageous in oil refineries utilizing rundown blending, for example, either entirely or in certain product pools-as such configurations are particularly susceptible to these disturbances. Accordingly, dual-horizon optimization provides superior optimization in such configuration. Dual-horizon optimization process(es) further provide advantages when used in hybrid configurations, such as oil refineries that utilize at least some rundown blending and at least some batch blending or other asynchronous blending techniques. In any such circumstances, the dual-horizon optimization process(es) generate improved optimized operational parameters that may be utilized to improve guided control the processing plant in a manner that better optimizes for particular target parameter(s).

### Definitions

In some embodiments, some of the operations above may be modified or further amplified. Furthermore, in some embodiments, additional optional operations may be included. Modifications, amplifications, or additions to the operations above may be performed in any order and in any combination.

Many modifications and other embodiments of the disclosure set forth herein will come to mind to one skilled in the art to which this disclosure pertains having the benefit of the teachings presented in the foregoing description and the associated drawings. Therefore, it is to be understood that the embodiments are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

The term "processing plant" refers to any building, complex, or arrangement of components that perform a chemical, physical, electrical, or mechanical process for converting input materials into one or more output products. Non-limiting examples of a processing plant include a chemical processing plant and an oil refinery plant.

The term "physical component" refers to a real-world machine, tank, pipe, or other physical structure within a processing plant that is utilized in a process performed by the processing plant. In an example context of an oil refinery plant, non-limiting examples of a physical component include a component storage tank, a blender, a product tank, a pump, a heat exchanger, a pressure vessel, a pipe or piping system, and a valve.

The term "physical layout" refers to physical components and connections such physical components of a processing plant. In some embodiments, the physical layout of a processing plant enables a flow or other transmission of objects, liquid, and/or other flow components between particular physical components.

The term "mode" refers to a configuration of behavior utilized by a physical component that defines what process(es) the physical component is to perform and/or how the physical component performs the one or more process(es). In some embodiments, a mode of a physical component alters the inputs received by the physical component, the processes performed by the physical component to process such component(s), and/or the outputs of the physical component.

The term "physical path" refers to each physical component and connection between physical components that is utilized in a particular configuration to produce a particular product.

The term "blender" refers to specialized machinery that is configurable to receive, process, and/or combine inputs into a particular product. In one example context, a blender receives input products and processes such input products to produce a particular desired final output product.

The term "rundown blender" refers to a physical component embodying a blender that is configured to utilize one or more physical connection(s) to blend one or more input(s) to product a final output product that is not stored in any intermediary storage tank upon blending.

The term "rundown blender optimization process" refers to one or more algorithm(s), function(s), model(s), and/or other computer-executed mathematical maximizations or minimizations of one or more target value(s) during production of one or more particular amounts of final product(s) utilizing a rundown blender.

The term "crude flow unit" refers to a physical component that provides crude oil having determinable properties to one or more other physical component(s) based at least in part on parameter(s) having configurable value(s).

The term "external representation data" refers to electronically managed data that represents a physical layout of a processing plant. External representation data is usable to render a user interface where a component and connections between the component with other component(s) is/are depicted in a manner that matches the real-world configuration between such components. In external representation data, a physical component is representable using a single renderable element.

The term "modal path" refers to a flow of input and output products that are utilized by one or more physical component(s) to produce a particular final product.

The term "physical representation" refers to at least a portion of external representation data that represents a physical component or connection between two physical components in a physical layout associated with a processing plant.

The term "internal representation data" refers to electronically managed data that represents an abstraction of physical component(s) and/or connection(s) between physical components of a processing plant in a manner that separately represents different modal paths associated with modes of at least one physical component. In internal representation data, a physical component is representable using a different renderable element for each modal path associated with the physical component.

The term "virtual representation" refers to at least a portion of internal representation data that represents a particular modal path abstracted associated with a particular physical component of a processing plant.

The term "optimized operational parameter" refers to a value for a particular configurable parameter utilized to operate a physical component or connection between two physical components determined to optimize one or more target values utilizing one or more optimization model(s) and/or process(es).

The term "optimized amount" with respect to a particular product refers to an amount of a final product that is to be produced via a processing plant to optimize one or more target variables. In one example context, an optimized amount for each product of a plurality of products refers to the amount of each of such products to be produced to maximize a particular target variable, such as a profit variable.

The term "operation" with respect to a physical component refers to one or more behavior(s) performed by the physical component.

The term "lift schedule" refers to electronically managed data representing timestamps and/or timestamp intervals at or during which particular final product(s) are to be output from a processing plant. In some embodiments, a lift schedule corresponds to a pickup schedule that defines timestamps or timestamp intervals at which final products will be exported from the processing plant to another location, thus freeing up storage capacity within one or more physical component(s) of the processing plant.

The term "time interval" refers to a range of time defined by two or more timestamps.

The term "time slice" refers to electronically managed data representing a defined time interval.

The term "user-facing interface" refers to any electronically renderable visual output producible for viewing by an end user.

The term "flowsheet model" refers to a renderable format for representing physical component(s), connection(s) between said physical component(s), and/or flow of inputs and/or products between such physical component(s), utilizing one or more graph element(s).

The term "target parameter" refers to a particular property, data value, or other element to be optimized via an optimization process. In some embodiments, a target parameter represents a property having a particular value that is to be maximized or minimized during optimization. Non-limiting examples of a target parameter include profitability, throughput, and waste.

The term "plant characteristic" refers to electronically managed data that represents a particular property of a processing plant or determination regarding a processing plant. Non-limiting examples of a plant characteristic include a number of virtual blenders associated with a processing plant, a number of physical blenders associated with a processing plant, whether the processing plant is agile, whether a target parameter is impacted by one or more changing condition(s) of the processing plant, and the final products that can be produced by the processing plant.

The term "dual-horizon optimization process" refers to a process for generating data for use in optimizing operation of a processing plant in a manner that maximizes and/or minimizes one or more target parameter(s) as desired utilizing at least a long-horizon optimization process and a short-horizon optimization process.

The term "long-horizon optimization process" refers to a process that generates data that informs operation of a processing plant associated with a future time interval. In some embodiments, a long-horizon optimization process generates target amounts of one or more final product(s) to be produced via a corresponding processing plant over a particular timestamp interval to optimize one or more target parameter(s) over the particular timestamp interval.

The term "short-horizon optimization process" refers to a process that generates data that informs real-time operation of a processing plant. In some embodiments, a short-horizon optimization process generates configurations and/or target product(s) to be produced by a processing plant in real-time.

The term "long-horizon optimized plan" refers to one or more parameter(s) representing the output of a long-horizon optimization process. In some embodiments, a long-horizon optimized plan includes at least target amount(s) for one or more final product(s) that optimizes one or more target parameter(s) over a timestamp interval by balancing both short-term and long-term requirements of a processing plant. One example long-horizon optimized plan includes target amount(s) of final product(s) optimized over a m-day timestamp interval to balance supply-and-demand of such final products in a manner that maximizes profitability of an oil refinery.

The term "short-horizon optimized plan" refers to one or more optimized operational parameter(s) representing the output of a short-horizon optimization process generated via a dual-horizon optimization process. In some embodiments, a short-horizon optimized plan includes at least a set of planned moves to operate a processing plant. In some embodiments, a short-horizon optimized plan is subject to change as time continues, while still being guided by the long-horizon optimized plan.

The term "plant configuration result data" refers to one or more data identifiers that represents plant characteristic(s) of a processing plant and/or particular determination(s) associated with a processing plant.

The term "concurrent products" refers to one or more final product(s) indicated to be produced over a particular timestamp interval in a long-horizon optimization plan produced via a long-horizon optimization process.

The term "primary product" refers to a final product associated with a target amount that indicates a sufficiently high volume in a long-horizon optimized plan. In some embodiments, a primary product is determinable based on comparison between a target amount associated with the final product and a corresponding threshold indicating a minimum volume to be a primary product. In some embodiments, a primary product is determinable based on comparison between a target amount associated with the final product and target amounts associated with other final product(s).

The term "secondary product" refers to any final product represented in a long-horizon optimized plan that is not a primary product.

The term "closest primary product" with respect to a secondary product refers to a primary product represented in the same long-horizon optimized plan that is indicated as closest to the secondary product in terms of specification or recipe utilized to product that primary product.

The term "agile" refers to a capability for a processing plant or a physical component thereof to efficiently operate in view of changes in product demand and/or product flow rate. In this regard, a processing plant that is "agile" includes physical component(s) that efficiently operate in view of changes in product demand and/or product flow rate, whereas a processing plant that is "not agile" includes one or more physical component(s) that do not efficiently operate in view of changes in product demand and/or product flow rate.

The term "improvement data" refers to electronically managed data indicating a delta with respect to a particular target parameter or a plurality of target parameter(s) that would result from addition of a new blender in the processing plant. In one example context, improvement data represents an increase in profitability of a processing plant that would result from inclusion of one new blender in the processing plant.

The term "improvement threshold" refers to a particular data value for comparison with improvement data that, if satisfied, indicates generation of an indication should be generated. In some embodiments, an improvement threshold embodies a particular data value that, if the value of improvement data exceeds, is satisfied. In other embodiments, an improvement threshold embodies a particular data value that, if the value of the improvement data falls below, is satisfied.

### EXAMPLE SYSTEMS AND APPARATUSES OF THE DISCLOSURE

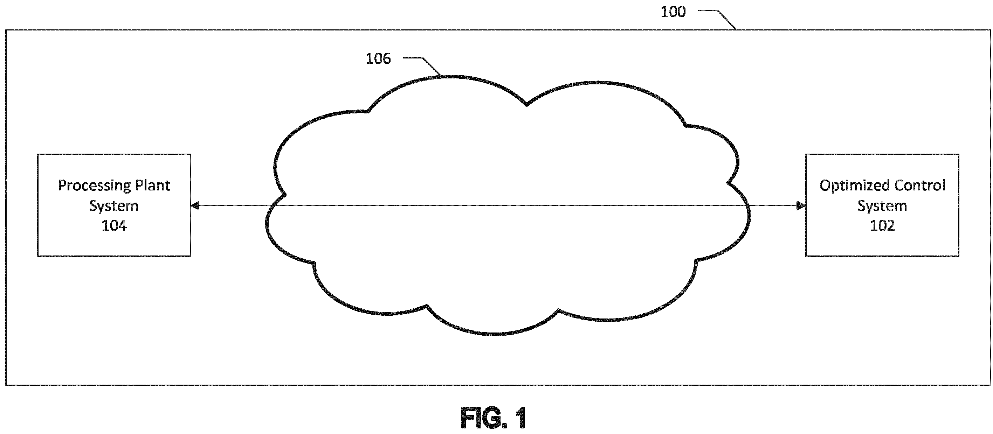

FIG. 1 illustrates a block diagram of a system that may be specially configured within which embodiments of the present disclosure may operate. Specifically, FIG. 1 depicts an example system 100. As illustrated, the system 100 includes a processing plant system 104 in communication with an optimized control system 102. In some embodiments, the processing plant system 104 communicates with the optimized control system 102 over one or more communications network(s), for example a communications network 106.

It should be appreciated that the communications network 106 in some embodiments is embodied in any of a myriad of network configurations. In some embodiments, the communications network 106 embodies a public network (e.g., the Internet). In some embodiments, the communications network 106 embodies a private network (e.g., an internal localized, or closed-off network between particular devices). In some other embodiments, the communications network 106 embodies a hybrid network (e.g., a network enabling internal communications between particular connected devices and external communications with other devices). The communications network 106 in some embodiments includes one or more base station(s), relay(s), router(s), switch(es), cell tower(s), communications cable(s) and/or associated routing station(s), and/or the like. In some embodiments, the communications network 106 includes one or more user controlled computing device(s) (e.g., a user owned router and/or modem) and/or one or more external utility devices (e.g., Internet service provider communication tower(s) and/or other device(s)).

Each of the components of the system 100 communicatively coupled to transmit data to and/or receive data from one another over the same or different wireless and/or wired networks embodying the communications network 106. Such configuration(s) include, without limitation, a wired or wireless Personal Area Network (PAN), Local Area Network (LAN), Metropolitan Area Network (MAN), Wide Area Network (WAN), and/or the like. Additionally, while FIG. 1 illustrate certain system entities as separate, standalone entities communicating over the communications network 106, the various embodiments are not limited to this architecture. In other embodiments, one or more computing entities share one or more components, hardware, and/or the like, or otherwise are embodied by a single computing device such that connection(s) between the computing entities are over the communications network 106 are altered and/or rendered unnecessary. For example, in some embodiments, the processing plant system 104 includes some or all of the optimized control system 102, such that an external communications network 106 is not required.

In some embodiments, the processing plant system 104 and the optimized control system 102 are embodied in an on-premises system within or associated with the processing plant. In some such embodiments, the processing plant system 104 and the optimized control system 102 are communicatively coupled via at least one wired connection. Alternatively or additionally, in some embodiments, the processing plant system 104 embodies or includes the representative processing system 102, for example as a software component of a single enterprise terminal.

The processing plant system 104 includes any number of computing device(s), system(s), physical component(s), and/or the like, that facilitates producing of any number of products, for example utilizing particular configurations that cause processing of particular inputs available within the processing plant system 104. In some embodiments, the processing plant system 104 includes one or more physical component(s), connection(s) between physical component(s), and/or computing system(s) that control operation of each physical component therein. In one example context, the processing plant system 104 embodies a refinery plant, which includes physical component(s) embodying rundown blender(s), product tank(s), or other component(s) that perform particular process(es) to alter properties of inputs to the component, crude flow unit(s), piping between such physical component(s), valve(s) controlling flow between the physical component(s), and/or the like. Additionally or alternatively, in some embodiments the processing plant system 104 includes one or more computing system(s) that are specially configured to operate the physical component(s) in a manner that produces one or more particular product(s) simultaneously. In some embodiments, a processing plant system 104 includes one or more computing device(s) and/or system(s) embodied in hardware, software, firmware, and/or a combination thereof, that configure and/or otherwise control operation of one or more physical component(s) in the processing plant. For example, in some embodiments, such computing device(s) and/or system(s) include one or more programmable logic controller(s), MPC(s), application server(s), centralized control system(s), and/or the like, that control(s) configuration and/or operation of at least one physical component. It will be appreciated that different processing plant system(s) 104 may include different physical component(s), computing system(s), and/or the like. For example, different refinery plants may include different components, different number of components, different types of components, and/or the like, that cause the processing plant system to operate differently from other refinery plants.

The optimized control system 102 includes one or more computing device(s) and/or system(s) embodied in hardware, software, firmware, and/or a combination thereof, that generates optimized operational parameter(s) utilizing a dual-horizon optimization process. In some embodiments, an optimized control system 102 includes one or more specially configured application server(s), database server(s), end user device(s), cloud computing system(s), and/or the like. Additionally or alternatively, in some embodiments, the optimized control system 102 includes one or more client devices, user devices, and/or the like, that enables access to functionality provided via the optimized control system 102, for example via a web application, native application, and/or the like.

In some embodiments, the optimized control system 102 is configured to perform a dual-horizon optimization process, including a long-horizon optimization process and a short-horizon optimization process. For example, in some embodiments, the optimized control system 102 is configured to perform a long-horizon optimization process and a short-horizon optimization process based at least in part on the results of the long-horizon optimization process and/or configuration of the processing plant itself. In some such embodiments, the optimized control system 102 is configured to generate, maintain, and/or process one or more one or more representation(s) of a processing plant utilized in the dual-horizon optimization process. For example, in some embodiments the optimized control system 102 generates, maintains, and/or otherwise processes one or more representation(s) of a virtualization of all modal paths for producing final products via the physical components of a processing plant corresponding to the processing plant system 104. In this regard, in some embodiments, the optimized control system 102 generates, maintains, and/or processes a physical representation that corresponds to the physical layout of the processing plant to generate a corresponding virtual representation utilized in the dual-horizon optimization process. For example, the virtual representation may include a virtual component representing a virtual component inventory corresponding to a particular final product. The optimized control system 102 in some embodiments utilizes the virtual representation of the processing plant in the dual-horizon optimization process. Additionally or alternatively, in some embodiments, the optimized control system 102 determines, generates, and/or otherwise identifies particular data utilized to control operation of the physical component(s) of or associated with the processing plant system 104. In some embodiments, the optimized control system 102 includes or embodies a display or other user interface to which a user-facing interface is renderable.

In some embodiments, the optimized control system 102 and/or processing plant system 104 communicate with one another to perform the various actions described herein. For example, in some embodiments, the optimized control system 102 and the processing plant system 104 communicate to generate optimized operational parameter(s) associated with operation of a particular processing plant via a dual-horizon process. Additionally or alternatively, in some embodiments, the optimized control system 102 and the processing plant system 104 communicate to facilitate control of the processing plant based at least in part on the generated optimized operational parameter(s). For example, in some embodiments the optimized control system 102 and the processing plant system 104 communicate to configure one or more physical component(s) of the processing plant to product particular product(s) based at least in part on the optimized operational parameter(s).

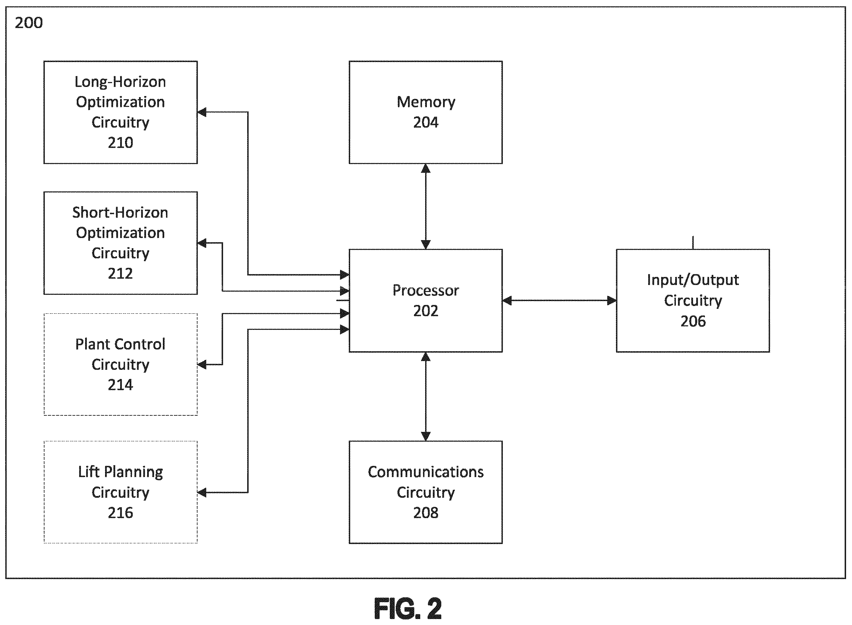

FIG. 2 illustrates a block diagram of an example apparatus that may be specially configured in accordance with at least one example embodiment of the present disclosure. Specifically, FIG. 2 depicts an example dual-horizon optimization apparatus 200 ("apparatus 200") specially configured in accordance with at least some example embodiments of the present disclosure. In some embodiments, the optimized control system 102 and/or a portion thereof is embodied by one or more system(s), such as the apparatus 200 as depicted and described in FIG. 2. The apparatus 200 includes processor 202, memory 204, input/output circuitry 206, communications circuitry 208, long-horizon optimization circuitry 210, short-horizon optimization circuitry 212, optional plant control circuitry 214, and optional lift planning circuitry 216. In some embodiments, the apparatus 200 is configured, using one or more of the sets of circuitry 202, 204, 206, 208, 210, 212, 214, and/or 216, to execute and perform the operations described herein.

In general, the terms computing entity (or "entity" in reference other than to a user), device, system, and/or similar words used herein interchangeably may refer to, for example, one or more computers, computing entities, desktop computers, mobile phones, tablets, phablets, notebooks, laptops, distributed systems, items/devices, terminals, servers or server networks, blades, gateways, switches, processing devices, processing entities, set-top boxes, relays, routers, network access points, base stations, the like, and/or any combination of devices or entities adapted to perform the functions, operations, and/or processes described herein. Such functions, operations, and/or processes may include, for example, transmitting, receiving, operating on, processing, displaying, storing, determining, creating/generating, monitoring, evaluating, comparing, and/or similar terms used herein interchangeably. In one embodiment, these functions, operations, and/or processes can be performed on data, content, information, and/or similar terms used herein interchangeably. In this regard, the apparatus 200 embodies a particular, specially configured computing entity transformed to enable the specific operations described herein and provide the specific advantages associated therewith, as described herein.

Although components are described with respect to functional limitations, it should be understood that the particular implementations necessarily include the use of particular computing hardware. It should also be understood that in some embodiments certain of the components described herein include similar or common hardware. For example, in some embodiments two sets of circuitry both leverage use of the same processor(s), network interface(s), storage medium(s), and/or the like, to perform their associated functions, such that duplicate hardware is not required for each set of circuitry. The use of the term "circuitry" as used herein with respect to components of the apparatuses described herein should therefore be understood to include particular hardware configured to perform the functions associated with the particular circuitry as described herein.

Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like. Alternatively or additionally, in some embodiments, other elements of the apparatus 200 provide or supplement the functionality of another particular set of circuitry. For example, the processor 202 in some embodiments provides processing functionality to any of the sets of circuitry, the memory 204 provides storage functionality to any of the sets of circuitry, the communications circuitry 208 provides network interface functionality to any of the sets of circuitry, and/or the like.

In some embodiments, the processor 202 (and/or co-processor or any other processing circuitry assisting or otherwise associated with the processor) is/are in communication with the memory 204 via a bus for passing information among components of the apparatus 200. In some embodiments, for example, the memory 204 is non-transitory and may include, for example, one or more volatile and/or non-volatile memories. In other words, for example, the memory 204 in some embodiments includes or embodies an electronic storage device (e.g., a computer readable storage medium). In some embodiments, the memory 204 is configured to store information, data, content, applications, instructions, or the like, for enabling the apparatus 200 to carry out various functions in accordance with example embodiments of the present disclosure.

The processor 202 may be embodied in a number of different ways. For example, in some example embodiments, the processor 202 includes one or more processing devices configured to perform independently. Additionally or alternatively, in some embodiments, the processor 202 includes one or more processor(s) configured in tandem via a bus to enable independent execution of instructions, pipelining, and/or multithreading. The use of the terms "processor" and "processing circuitry" should be understood to include a single core processor, a multi-core processor, multiple processors internal to the apparatus 200, and/or one or more remote or "cloud" processor(s) external to the apparatus 200.

In an example embodiment, the processor 202 is configured to execute instructions stored in the memory 204 or otherwise accessible to the processor. Alternatively or additionally, the processor 202 in some embodiments is configured to execute hard-coded functionality. As such, whether configured by hardware or software methods, or by a combination thereof, the processor 202 represents an entity (e.g., physically embodied in circuitry) capable of performing operations according to an embodiment of the present disclosure while configured accordingly. Alternatively or additionally, as another example in some example embodiments, when the processor 202 is embodied as an executor of software instructions, the instructions specifically configure the processor 202 to perform the algorithms embodied in the specific operations described herein when such instructions are executed.

As one particular example embodiment, the processor 202 is configured to perform various operations associated with generating optimized operational parameter(s) via a dual-horizon optimization process. In some embodiments, the processor 202 includes hardware, software, firmware, and/or a combination thereof, that generates or otherwise identifies a long-horizon optimized plan generated via a long-horizon optimization process. Additionally or alternatively, in some embodiments, the processor 202 includes hardware, software, firmware, and/or a combination thereof, that processes data indicative of configuration of a processing plant to determine a short-horizon optimization process for use. Additionally or alternatively, in some embodiments, the processor 202 includes hardware, software, firmware, and/or a combination thereof, that generates at least one optimized operational parameter, for example utilizing a short-horizon optimization process based at least in part on a long-horizon optimized plan generated via a long-horizon optimization process. Additionally or alternatively, in some embodiments, the processor 202 includes hardware, software, firmware, and/or a combination thereof, that facilitate control of at least one physical component based at least in part on optimized operational parameter(s). Additionally or alternatively, in some embodiments, the processor 202 includes hardware, software, firmware, and/or a combination thereof, that generates or otherwise configures a lift schedule based at least in part on optimized operational parameter(s) and/or control of one or more physical component(s) of a processing plant.

In some embodiments, the apparatus 200 includes input/output circuitry 206 that provides output to the user and, in some embodiments, to receive an indication of a user input. In some embodiments, the input/output circuitry 206 is in communication with the processor 202 to provide such functionality. The input/output circuitry 206 may comprise one or more user interface(s) and in some embodiments includes a display that comprises the interface(s) rendered as a web user interface, an application user interface, a user device, a backend system, or the like. In some embodiments, the input/output circuitry 206 also includes a keyboard, a mouse, a joystick, a touch screen, touch areas, soft keys a microphone, a speaker, or other input/output mechanisms. The processor 202 and/or input/output circuitry 206 comprising the processor may be configured to control one or more functions of one or more user interface elements through computer program instructions (e.g., software and/or firmware) stored on a memory accessible to the processor (e.g., memory 204, and/or the like). In some embodiments, the input/output circuitry 206 includes or utilizes a user-facing application to provide input/output functionality to a client device and/or other display associated with a user.

In some embodiments, the apparatus 200 includes communications circuitry 208. The communications circuitry 208 includes any means such as a device or circuitry embodied in either hardware or a combination of hardware and software that is configured to receive and/or transmit data from/to a network and/or any other device, circuitry, or module in communication with the apparatus 200. In this regard, in some embodiments the communications circuitry 208 includes, for example, a network interface for enabling communications with a wired or wireless communications network. Additionally or alternatively in some embodiments, the communications circuitry 208 includes one or more network interface card(s), antenna(s), bus(es), switch(es), router(s), modem(s), and supporting hardware, firmware, and/or software, or any other device suitable for enabling communications via one or more communications network(s). Additionally or alternatively, the communications circuitry 208 includes circuitry for interacting with the antenna(s) and/or other hardware or software to cause transmission of signals via the antenna(s) or to handle receipt of signals received via the antenna(s). In some embodiments, the communications circuitry 208 enables transmission to and/or receipt of data from user device, one or more asset(s) or accompanying sensor(s) , and/or other external computing device in communication with the apparatus 200.

The long-horizon optimization circuitry 210 includes hardware, software, firmware, and/or a combination thereof, that supports performing a long-horizon optimization process of a dual-horizon optimization process and storing data associated with the long-horizon optimization process. For example, in some embodiments, the long-horizon optimization circuitry 210 includes hardware, software, firmware, and/or a combination thereof, that performs a dynamic model based at least in part on a configuration of a processing plant. In some embodiments, the configuration of the processing plant is embodied as a flowsheet model maintained via the apparatus 200. Additionally or alternatively, in some embodiments, the long-horizon optimization circuitry 210 includes hardware, software, firmware, and/or a combination thereof that generates and/or maintains a virtual representation corresponding to a configuration of a processing plant. Additionally or alternatively, in some embodiments, the long-horizon optimization circuitry 210 includes hardware, software, firmware, and/or a combination thereof that processes the virtual representation via the long-horizon optimization process. Additionally or alternatively, in some embodiments, the long-horizon optimization circuitry 210 includes hardware, software, firmware, and/or a combination thereof, that generates a long-horizon optimized plan outputted via a long-horizon optimized plan. For example, in some embodiments, the long-horizon optimization circuitry 210 includes hardware, software, firmware, and/or a combination thereof, that generates a long-horizon optimized plan representing target amount(s) of final product(s) to be produced over a particular timestamp interval, for example over the next m-days (where m is a number). In some embodiments, the long-horizon optimized plan includes optimized operational parameter(s) for a particular time interval, for example representing such target amounts for one or more final product(s). Additionally or alternatively, in some embodiments, the long-horizon optimization circuitry 210 includes hardware, software, firmware, and/or a combination thereof, that generates improvement data and/or generates indication(s) based at least in part on the improvement data. In some embodiments, long-horizon optimization circuitry 210 includes a separate processor, specially configured field programmable gate array (FPGA), or a specially programmed application specific integrated circuit (ASIC).

The short-horizon optimization circuitry 212 includes hardware, software, firmware, and/or a combination thereof, that supports performing a short-horizon optimization process of a dual-horizon optimization process and storing data associated with the short-horizon optimization process. For example, in some embodiments, the short-horizon optimization circuitry 212 includes hardware, software, firmware, and/or a combination thereof, that performs a short-horizon optimization process based at least in part on a configuration of a processing plant. Additionally or alternatively, in some embodiments, the short-horizon optimization circuitry 212 includes hardware, software, firmware, and/or a combination thereof, that generates and/or maintains plant result configuration data indicating the results of one or more determination(s) regarding the configuration of a particular processing plant, for example whether the processing plant includes greater than or equal to a certain number of blenders, whether the processing plant includes physical component(s) that are agile, whether the processing plant includes physical component(s) that are affected by product changes and/or changes in flow rate. Additionally or alternatively, in some embodiments, the short-horizon optimization circuitry 212 includes hardware, software, firmware, and/or a combination thereof, that identifies a short-horizon optimization process for use, for example based at least in part on plant configuration result data and/or the like. Additionally or alternatively, in some embodiments, the short-horizon optimization circuitry 212 includes hardware, software, firmware, and/or a combination thereof, that performs a short-horizon optimization process to generate optimized operational parameter(s). In some embodiments, short-horizon optimization circuitry 212 includes a separate processor, specially configured field programmable gate array (FPGA), or a specially programmed application specific integrated circuit (ASIC).

The optional control circuitry 214 includes hardware, software, firmware, and/or a combination thereof, that supports various functionality associated with causing configuration or other causing operation of at least one physical component of a processing plant. For example, in some embodiments, the control circuitry 214 includes hardware, software, firmware, and/or a combination thereof, that causes operation of a physical component based at least in part on at least one optimized operational parameter. Additionally or alternatively, in some embodiments, the control circuitry 214 includes hardware, software, firmware, and/or a combination thereof, that causes operation of a plurality of physical components based at least in part on at least one optimized operational parameter. Additionally or alternatively, in some embodiments, the control circuitry 214 includes hardware, software, firmware, and/or a combination thereof, that configures at least one physical component of a processing plant to produce a plurality of optimized amounts corresponding to a plurality of products over a particular time interval, for example defined by at least one optimized operational parameter. In some embodiments, the control circuitry 214 includes a separate processor, specially configured field programmable gate array (FPGA), or a specially programmed application specific integrated circuit (ASIC).

The optional lift planning circuitry 216 includes hardware, software, firmware, and/or a combination thereof, that supports various functionality associated with configuring a lift schedule. For example, in some embodiments, the lift planning circuitry 216 includes hardware, software, firmware, and/or a combination thereof, that enables configuration of a lift schedule by assigning a time slices to particular lift of a final product available at that time slice. Additionally or alternatively, in some embodiments, the lift planning circuitry 216 includes hardware, software, firmware, and/or a combination thereof, that enables configuration of the lift schedule based at least in part on the at least one optimized operational parameter and/or an optimized amount of each product of a plurality of products. Additionally or alternatively, in some embodiments, the lift planning circuitry 216 includes hardware, software, firmware, and/or a combination thereof, that generates a user-facing interface that enables input of a planned lift (e.g., a scheduled pickup of a particular product) at a particular times slice. In some embodiments, the lift planning circuitry 216 includes a separate processor, specially configured field programmable gate array (FPGA), or a specially programmed application specific integrated circuit (ASIC).

Additionally or alternatively, in some embodiments, two or more of the sets of circuitries 202-216 are combinable. Alternatively or additionally, in some embodiments, one or more of the sets of circuitry perform some or all of the functionality described associated with another component. For example, in some embodiments, two or more of the sets of circuitry 202-216 are combined into a single module embodied in hardware, software, firmware, and/or a combination thereof. Similarly, in some embodiments, one or more of the sets of circuitry, for example the long-horizon optimization circuitry 210, short-horizon optimization circuitry 212, plant control circuitry 214, and/or lift planning circuitry 216, is/are combined with the processor 202, such that the processor 202 performs one or more of the operations described above with respect to each of these sets of circuitry 210-216.

### EXAMPLE PROCESSING PLANT REPRESENTATIONS OF THE DISCLOSURE

Having described example systems and apparatus, example representations of a processing plant in accordance with the present disclosure will now be described. In some embodiments, the representations as depicted and described are associated with corresponding representation data, for example physical/external representation data and virtual/internal representation data. In some embodiments, one or more specially configured system(s) and/or device(s), for example the optimized control system 102 embodied by the apparatus 200, identifies, generates, and/or otherwise maintains data representing such depicted representation(s). Additionally or alternatively, in some embodiments, the optimized control system 102 embodied by the apparatus 200, for example, is configured to enable generation of a user-facing interface for inputting of and/or depicting of such representation(s).

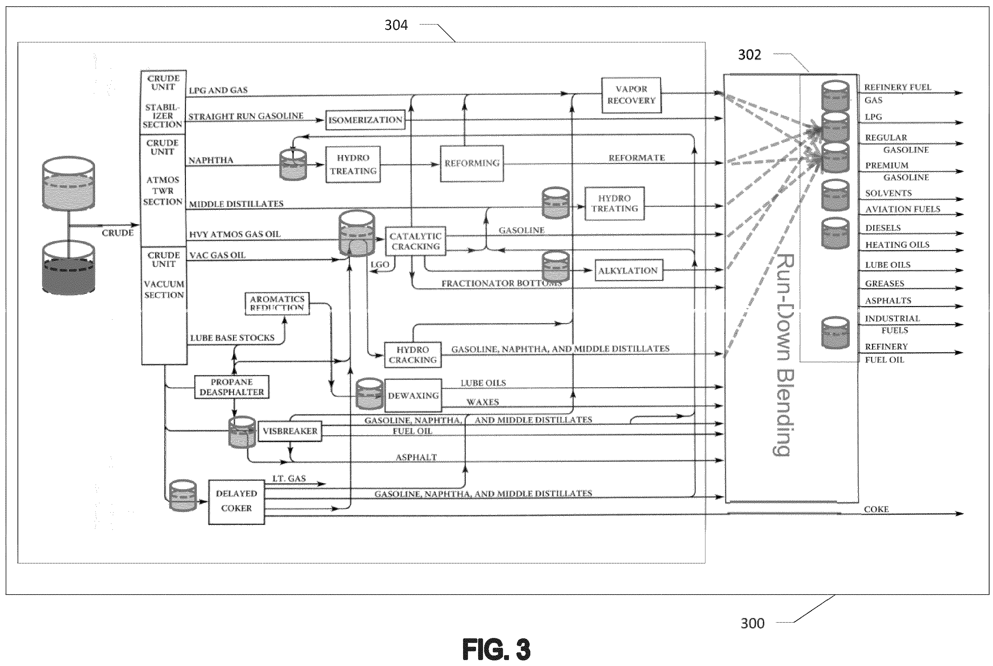

FIG. 3 illustrates a flowsheet model of a physical layout of an example processing plant in accordance with at least an example embodiment of the present disclosure. Specifically, FIG. 3 depicts an example external representation 300 of a processing plant. In this regard, in some embodiments the external representation 300 depicts a physical layout and configuration of the particular processing plant. As illustrated, the example processing plant is an oil refinery. It will be appreciated that in other embodiments, other processing plants may be utilized.

The external representation 300 includes a plurality of physical representations. In some embodiments, each physical representation is embodied by an element within the flowsheet model as depicted. Each element may represent a particular physical component within the processing plant itself. Additionally, the flowsheet model may define physical connections between said physical components. In this regard, input products may flow between such physical components based on such physical connections, for example for use in producing one or more final products via the processing plant represented by the external representation 300.

As illustrated, the external representation 300 includes one or more physical representation(s) of product tank(s) 302 and one or more physical representation(s) of processing unit(s) 304. In some embodiments, the processing units depicted in the physical representations of processing units 304 source a particular product, utilize the product as input, and/or processing incoming input products in a particular manner. For example, as illustrated, the physical representations of processing components 304 includes crude flow units, hydro treating processing units, reforming processing units, isomerization processing units, aromatics reduction processing units, and the like. Such processing units are depicted as connected via physical connections to one or more other upstream and/or downstream unit(s). It will be appreciated that any number, type, and/or configuration of processing units may be included in a particular processing plant.

In some embodiments, one or more of the physical representation of processing units 304 each flow to one or more particular physical representation(s) of product tank(s) 302. In some embodiments, a physical representation of a product tank 302 represents a corresponding physical rundown blender in the processing plant. At a particular time slice, the physical rundown blender may be configured to product a particular target product, for example based at least in part on input product(s) received via the processing unit(s) represented by the physical representations of processing units 304. In this regard, each product blender may serve as a processing unit and a final storage for a particular type of final product. Such processing plants do not include intermediary storage tanks, for example that store intermediary input components utilized by the product tank(s), that would serve as a buffer for use in producing particular final products. In some embodiments, a processing plant utilizing such rundown blending does not include any intermediary storage tank. In other embodiments, a processing plant utilizing rundown blending has some intermediary storage tank(s), but includes a limited amount of intermediary storage tanks. It will be appreciated that different processing plants may include different number, configuration, and/or types of blenders.

The physical representations of the processing plant in some embodiments correspond to the current operation of the physical component(s) therein. In this regard, the external representation 300 provides visibility only into the final product(s) currently being produced, and does not provide any insight or knowledge into what final product(s) is/are next. In this regard, optimization for the current operation alone may result in a myopic or otherwise insufficient optimization-for example that leads to current operation that is better profitable now but reduces long-term profitability of the processing plant.

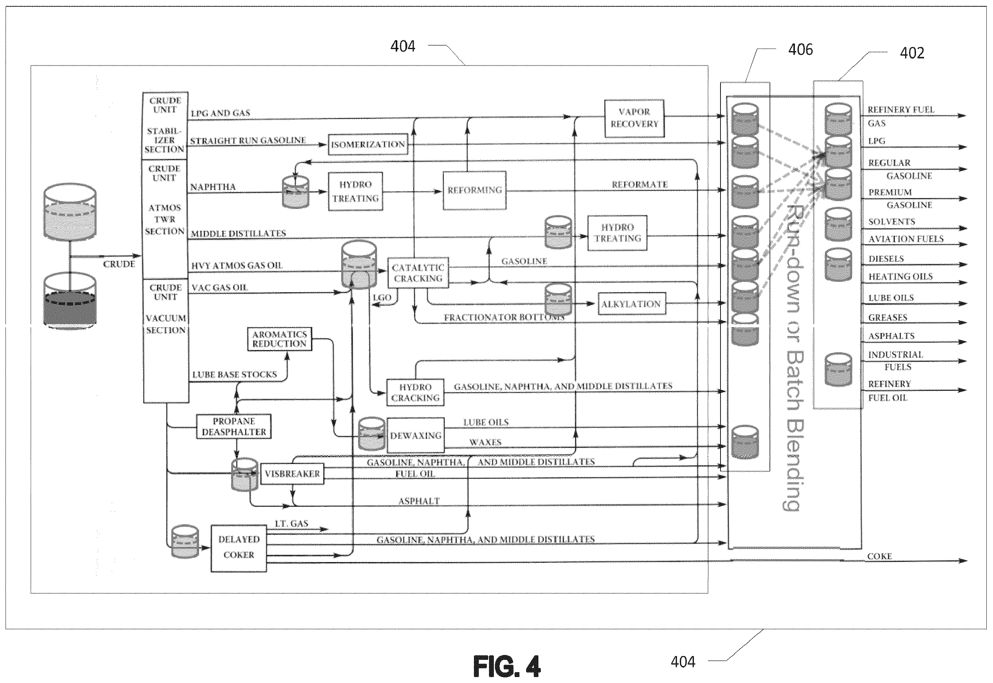

FIG. 4 illustrates a flowsheet model of an example processing plant virtualized for optimization in accordance with at least an example embodiment of the present disclosure. Specifically, FIG. 4 depicts an example internal representation 400 of a processing plant. The internal representation 400 corresponds to the same processing plant depicted in the external representation 300 as depicted and described with respect to FIG. 3. In this regard, the internal representation 400 represents a virtualized representation of the processing plant, for example that may be utilized for purposes of performing one or more optimization process. In some embodiments, the internal representation 400 includes one or more virtual representation(s) associated with physical component(s) of the processing plant that do not represent separate physical components of the processing plant itself.

As illustrated, the internal representation 400 includes virtual representation(s) of the processing unit(s) 404. In some embodiments, the virtual representation(s) of the processing unit(s) 404 correspond to the physical representations of the processing units 302. In some embodiments, each physical representation of a processing unit corresponds to a virtual representation in the internal representation 400 after virtualization. In other embodiments, the internal representation 400 includes two or more virtual representation(s) that correspond to the same physical processing unit and/or physical representation. For example, in some embodiments where a processing unit is controllable in different modes (e.g., that utilize different input products and/or product different output products), the processing unit may be associated with multiple different virtual representation(s) 404.

The internal representation 400 similarly includes virtual representation(s) of product tank(s) 402. In some embodiments, the virtual representation(s) of the product tank(s) 402 correspond to each of the physical representation(s) of the product tank(s) 302. In this regard, each of the product tank(s) in the processing plant may be represented by a single physical representation of the product tank in 302, and similarly correspond to a single virtual representation of the product tank in 402.

The internal representation 400 further includes virtual representations of the component tanks 406. In some embodiments, a virtual representation of a component tank corresponds to a virtualized intermediary storage tank for a particular input product utilized to produce a particular final product in one of the product tank(s). Additionally or alternatively, in some embodiments the virtual representation of the component tanks 406 are generated based at least in part on configurations of the processing plant, and/or what input products are utilized in each product tank in such different configurations. It should be appreciated that the virtual representation of the component tanks 406 do not have corresponding physical component(s) within the physical plant, as no such intermediary tanks exist. In some embodiments, the internal representation 400 is utilized for processing, and the external representation 300 is utilized for display to a user.

The virtual representations of the component tanks 406 in some embodiments are utilized for one or more optimization processes. For example, in some embodiments, the internal representation 400 of the processing plant (including the virtual representation of the component tanks 406) is utilized for performing a long-horizon optimization process, for example as part of a dual-horizon optimization process. In some embodiments, the virtual representations of the component tanks 406 enable a dual-horizon optimization process, for example that includes a long-horizon optimization process that performs one or more calculations with respect to amounts of component input products required to make particular amounts of target products, what final product(s) and/or at what cost(s) are optimal over a particular timestamp interval, and/or what balance of final product supply and demand optimally satisfy committed demand over the timestamp interval. In some embodiments, the long-horizon optimization process determines aggregated blending recipes and unit operating targets for achieving target amounts of final products that optimize one or more target parameter(s) and satisfies future demand over the timestamp interval. The long-horizon optimization process in some embodiments generates particular optimized operational parameter(s) that optimize one or more particular target parameter(s) over a particular timestamp interval, for example the next m-days where m represents a number. Non-limiting examples of long-horizon optimization processes are described in in US 17/084,480, filed October 29, 2020, and titled "PLANT-WIDE OPTIMIZATION INCLUDING BATCH OPERATIONS," and US patent 9,733,629, filed July 21, 2014, and titled "CASCADED MODEL PREDITIVE CONTROL (MPC) APPROACH FOR PLANTWIDE CONTROL AND OPTIMIZATION,". In this regard, it should be appreciated that such virtualization of the physical layout of the processing plant into the internal representation 400 enables the long-horizon optimization process to be performed even in circumstances where the processing plant utilizes rundown blending without any intermediary storage tanks for component input products.

### EXAMPLE DUAL-HORIZON OPTIMIZATION AND USE OF THE DISCLOSURE

Having described example systems, apparatuses, and processing plant representations of the disclosure, example representations, data flows, and uses of dual-horizon optimization will now be discussed. It will be appreciated that the apparatus 200, in some embodiments, maintains one or more computing environments that enable the data flows as depicted and described. In this regard, the apparatus 200 may implement the dual-horizon optimization process(es) and/or uses thereof alone or in conjunction with one or more other system(s), for example processing plant system(s) associated with a particular processing plant.

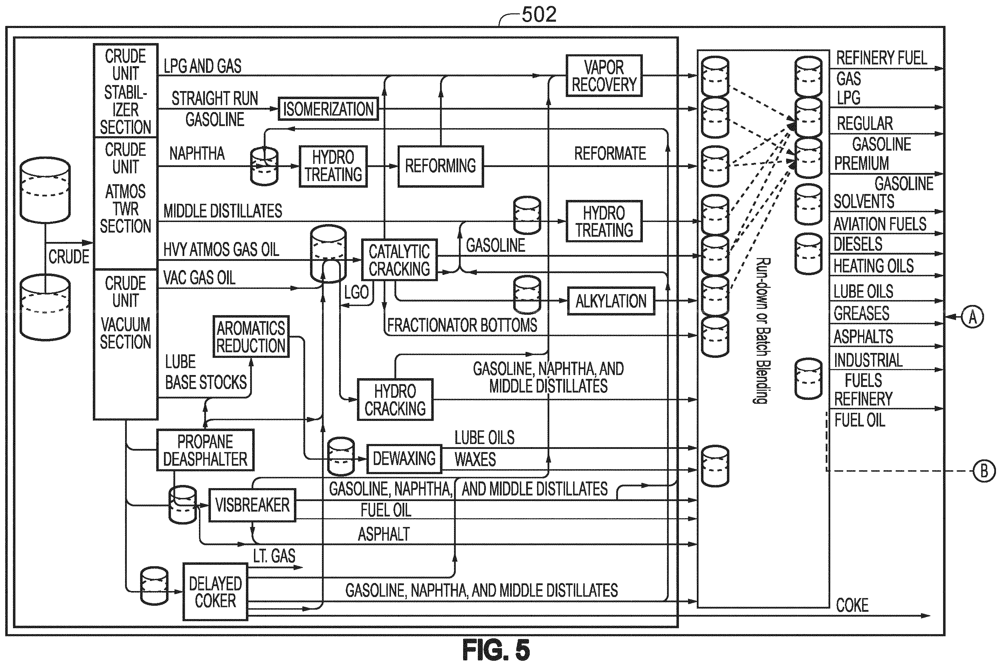

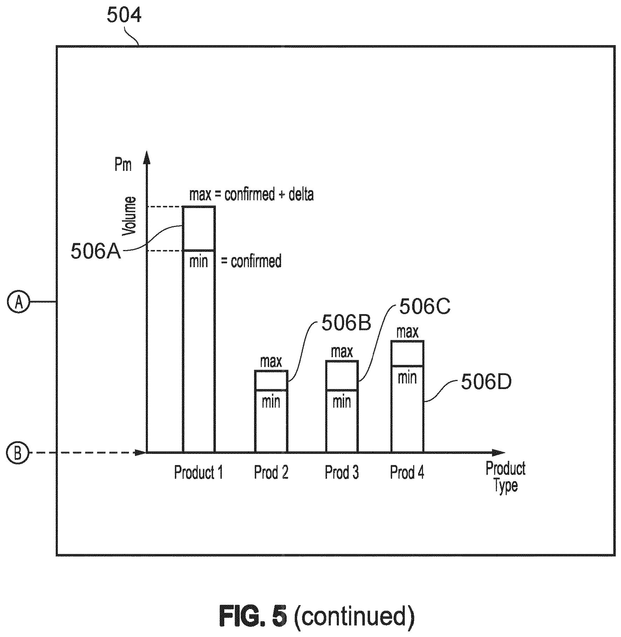

FIG. 5 illustrates a visualization of a long-horizon optimization and a short-horizon optimization in a dual-horizon optimization process in accordance with at least an example embodiment of the present disclosure. Specifically, FIG. 5 illustrates a visualization of a long-horizon optimized plan 504. The visualization of the long horizon optimization plan 504 embodies a bar graph including at least different target amounts (e.g., volume) of different final products to be generated by a particular processing plant, for example the processing plant as depicted and described with respect to FIGS. 3 and 4. The visualization of the long-horizon optimized plan 504 includes particular target amounts for the final products that optimizes one or more target parameters. For example, in some embodiments, the target amounts correspond to volumes of final products to be produced over a particular timestamp interval (e.g., the next m-days) to maximize a profitability parameter associated with the processing plant. As illustrated, the visualization of the long-horizon optimized plan 504 includes a visualization of a target amount for different products, for example target amount visualization 506A corresponding to a first final product, target amount visualization 506B corresponding to a second final product, target amount visualization 506C corresponding to a third final product, and target amount visualization 506D corresponding to a fourth final product. It will be appreciated that a long-horizon optimized plan may include any number of final products, and/or any different target amounts.

Each visualization associated with a final product includes a minimum and a maximum amount. In some embodiments, the minimum amount for a final product is generated corresponding to an amount of confirmed final product. Such confirmed final product may correspond to how much of said final product has already been purchased by customers of the processing plant, for example. The maximum amount for a final product in some embodiments is determined via the long-horizon optimization process. In this regard, the maximum amount in some embodiment represents a minimum amount plus a delta amount, where the delta amount is generated via the long-horizon optimization process to optimize one or more target parameter(s). For example, in some embodiments, the long-horizon optimization process maximizes the profitability of the processing plant. As illustrated, the visualization of the long-horizon optimized plan 504 indicates that more of the first final product is to be generated with a much greater volume than the other final products, followed by the fourth final product with the next-highest volume, followed by the third final product with the next-highest volume, and finally the second final product with the lowest volume to be produced. Based on the long-horizon optimized plan visualized in 504, the processing plant may then be operated to meet the target amounts for each of the final products over a particular time horizon, for example represented by the timestamp interval for which the long-horizon optimized plan was generated (e.g., over m-days).

In this regard, as illustrated the long-horizon optimized plan visualized in 504 represents an optimization of target parameter(s) over a longer time horizon. The short-horizon optimization process, alternatively, represents how to optimize the operation of the processing plant in real-time-or in other words as it is operating right now. FIG. 5 illustrates a visualization of a short-horizon optimized plan 502. The visualization of the short-horizon optimized plan 502 thus defines configuration of the processing plant as it operates. For example, as the physical components of the processing plant operate in real-time, the short-horizon optimized plan minimizes the impact to one or more target parameter(s) of disturbances to the processing plant, such as supply/demand fluctuations and/or unit upsets due to other causes. Disturbances may include demand fluctuations, feed supply or intermediate import disturbances, and/or the like, which ideally are maximally absorbed by the product tanks using the dual-horizon optimization described herein.

It should be appreciated that the long-horizon optimized plan guides the short-horizon optimized plan. In some embodiments for example, the long-horizon optimized plan optimally balances supply and demand to maximize profitability and/or otherwise optimize other target parameter(s), while the short-horizon optimized plan minimizes the impact of disturbances on such an optimized plan. In this regard, the dual-horizon optimization process utilizes both the long-horizon optimization and subsequent short-horizon optimization to both optimize the long-term (e.g., m-day) operation of the processing plant and corresponding short-term operation (e.g., real-time or right now) operation of the processing plant to meet or most closely reach the long-term plan.

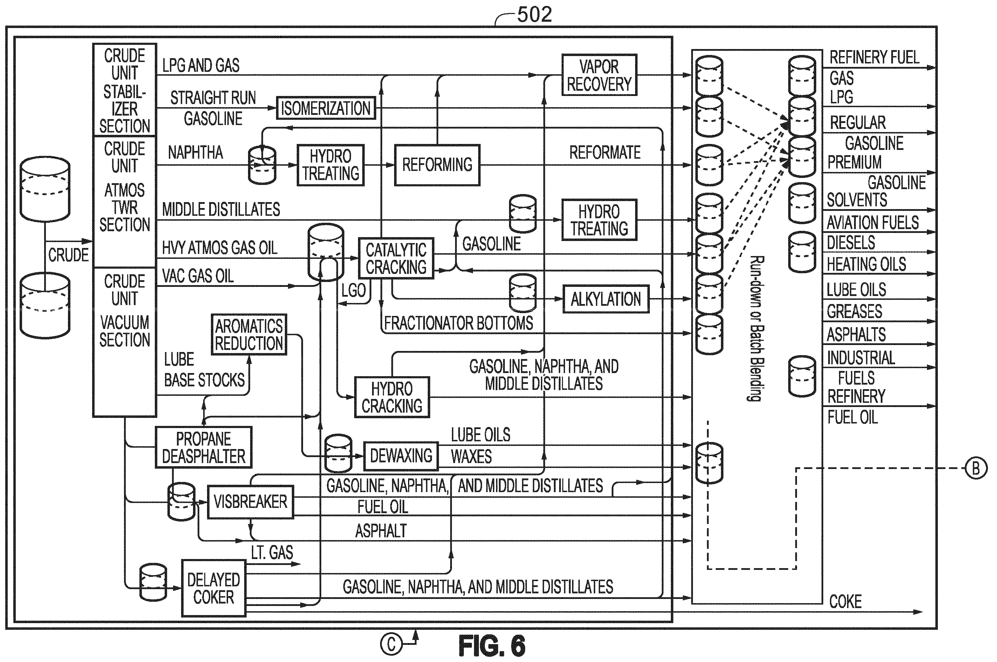

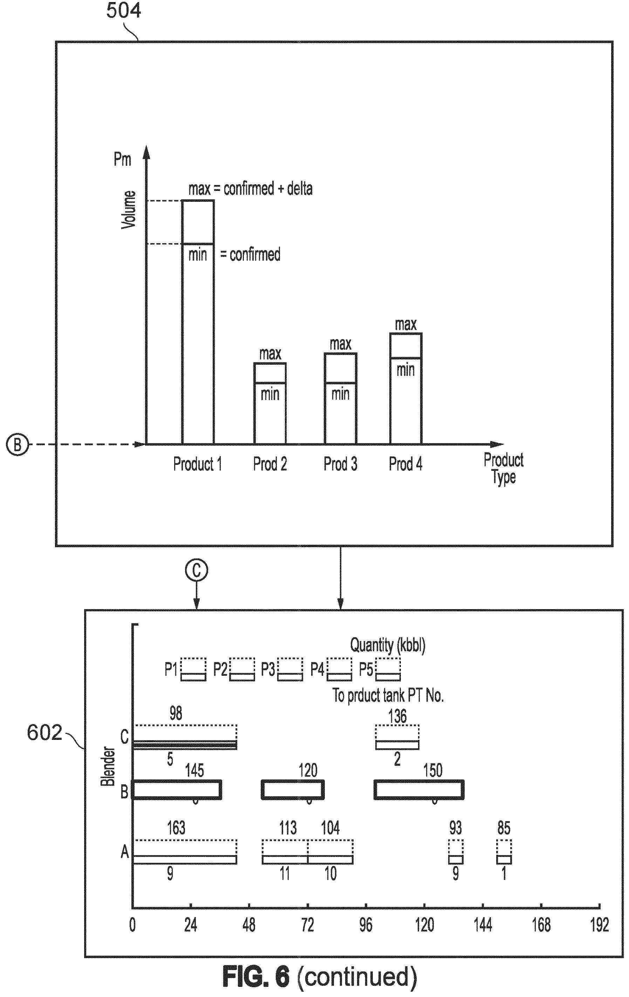

FIG. 6 illustrates an example visualization of lift schedule generation based at least in part on dual-horizon optimization in accordance with at least an example embodiment of the present disclosure. Specifically, FIG. 6 illustrates visualization of lift schedule generation based at least in part on a long-horizon optimized plan and a short-horizon optimized plan. In this regard, it will be appreciated that lift scheduling may be performed automatically or by a user (e.g., a scheduler) associated with the processing plant. The scheduler may generate and/or otherwise plan lifts arranged in a schedule, for example to different time slices within which a customer is to obtain a particular final product from the processing plant.

FIG. 6 depicts a visualization of a lift schedule 602. In some embodiments, the lift schedule is generated based at least in part on the dual-horizon optimization process. For example, the lift schedule may be generated based on the long-horizon optimized plan and the short-horizon optimized plan generated via the dual-horizon optimization process. The short-horizon optimized plan and the long-horizon optimized plan may both inform the lift scheduling generation process in different ways. For example, the lift schedule may be generated based on the current availability of inventories of final products in the product tanks, for example as defined by the configuration of the processing plant, short-horizon optimized plan, and/or the like, as well as future availability of inventories of final products in the product tanks, for example as defined by the configuration of the processing plant, short-horizon optimized plan, and/or long-horizon optimized plan. In this regard, the lift schedule may be generated to arrange lifts of particular amounts of final products at particular time slices such that no product tank overflows and/or underflows based on the current and future operation of the processing plant, as defined based at least in part on the short-horizon optimized plan and/or long-horizon optimized plan.

In some circumstances, lift scheduling is performed in this manner only in particular circumstances. For example, in some embodiments, lift scheduling based on current inventories and/or future inventories is utilized in a circumstance where the processing plant includes a number of blenders that is greater than or equal to a number of concurrent products at a given time, or a number of blenders that is less than the number of concurrent products but equal to the number of primary products at a given time. In other circumstances, the lift schedule is generated iteratively based on the availability of inventories in the product tanks and the scheduled product runs of each blender, for example in a circumstance where the number of blenders is less than the number of concurrent products.

In some embodiments, a scheduler utilizes one or more user interface(s) that indicate or otherwise depict the available inventories of final product(s) in the actual product tank(s) of a processing plant to generate the lift schedule 602, for example via a user interface depicting at least the product tanks of the external representation 302 as depicted and described herein. It will be appreciated that a scheduler may generate and/or arrange the lift schedule 602 using any of a myriad of known mechanisms, interfaces, and/or the like. In this regard, a user embodying a scheduler may utilize any of such known lift scheduling mechanism(s) to generate the lift schedule based on the available and/or future inventories as described herein.

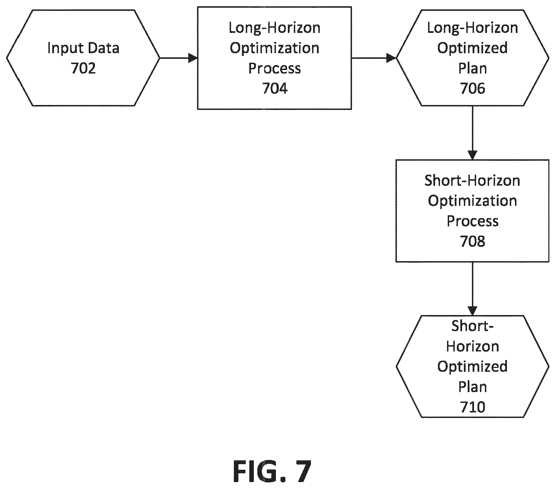

FIG. 7 illustrates an example data flow for dual-horizon optimization in accordance with at least an example embodiment of the present disclosure. Specifically, the data flow represents a dual-horizon optimization process that may be performed for planning plantwide optimization of a particular processing plant to optimize particular target parameter(s). In some embodiments, the apparatus 200 performs such a data flow via a computing environment maintained by the apparatus 200 alone or in conjunction with one or more external system(s), for example a processing plant system.

The data flow begins with input data 702. In some embodiments, the input data 702 represents a representation of a processing plant, configuration of the processing plant, confirmed demand for final product(s), a timestamp interval for optimization, financial data associated with input product(s) and/or final product(s), and/or other data that may be utilized during the dual-horizon optimization process. In some embodiments, the input data 704 includes determination(s) regarding the physical layout of the processing plant.

The input data 702 is processed via a long-horizon optimization process 704. In some embodiments, the long-horizon optimization process 704 generates a long-horizon optimized plan 706. In some embodiments, the long-horizon optimized plan 706 includes optimized operational parameter(s) associated with a particular timestamp interval, for example m-days. In some such embodiments, the long-horizon optimized plan 706 includes target amounts for final product(s) to be produced by the processing plant over the timestamp interval to optimize a particular target parameter, for example to maximize profitability. The long-horizon optimization process 704 in some embodiments are performed as described herein, for example with respect to FIG. 4.

In some embodiments, the long-horizon optimized plan 706 is utilized as input to the short-horizon optimization process 708. The short-horizon optimization process 706 generates a short-horizon optimized plan 710. The short-horizon optimized plan 710 in some embodiments includes optimized operational parameter(s) for real-time operation of the processing plant. For example, in some embodiments, the short-horizon optimized plan 710 includes optimized operational parameter(s) that represent ideal-resting values, anchor points, or other configurations for one or more physical component(s) of the processing plant. Additionally or alternatively, in some embodiments, the short-horizon optimized plan 710 includes target amounts of final product(s) to be produced by the processing plant in real-time.

The short-horizon optimization process 708 represents a particular process including one or more determination(s), transformation(s), and/or other data-driven action(s) that are performed for a particular processing plant to generate the short-horizon optimized plan 710. In some embodiments, the short-horizon optimization process 708 includes a specific process for setting blender outlet target flowrate(s), generating a lift schedule, setting ideal resting value(s) for one or more physical component(s), setting other configuration(s) of physical component(s) of the processing plant, and/or the like. In some embodiments, the particular short-horizon optimization process 708 as applied is based at least in part on the processing plant itself, for example the physical component(s) of the processing plant, configuration(s) of such physical component(s), determination(s) associated therewith, and/or the like, as described herein.

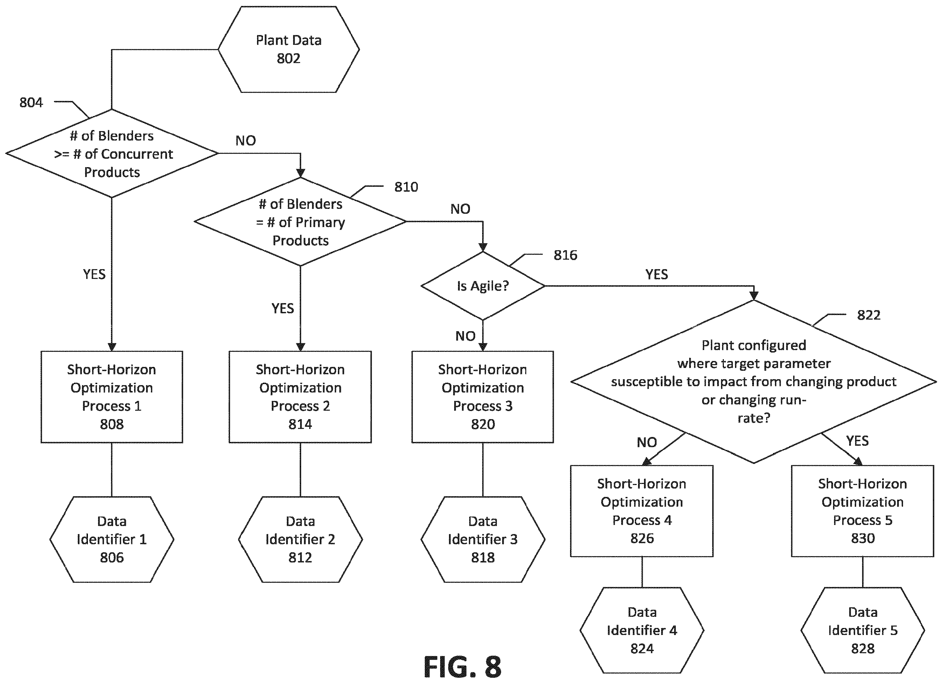

FIG. 8 illustrates an example decision tree for identifying a short-horizon optimization process for use in accordance with at least an example embodiment of the present disclosure. In some embodiments, the apparatus 200 implements the decision tree as part of a data flow. For example, in some embodiments, the apparatus 200 utilizes the decision tree to determine, in real-time and/or as part of a dual-horizon optimization process as described herein for example, what short-horizon optimization process to utilize for a particular processing plant. In other embodiments, the decision tree is utilized to set one or more data identifier(s) associated with a particular processing plant, where the data identifier(s) are utilized to configure and/or identify a particular short-horizon optimization process for use in performing dual-horizon optimization for a particular processing plant.

As illustrated, the decision tree utilizes plant data 802 as input. In some embodiments, the plant data 802 is embodied by or includes representation data associated with a processing plant. For example, in some embodiments, the plant data 802 includes an internal representation of a processing plant and/or an external representation of a processing plant. Additionally or alternatively, in some embodiments, the plant data 802 includes data values associated with or indicating a physical layout of the processing plant. For example, in some embodiments, the plant data 802 includes a number of blenders in the processing plant, configuration of such blenders (e.g., rundown blender or batch blender), and/or the like. Additionally or alternatively, in some embodiments, the plant data 802 includes data-driven determinations regarding configuration of a processing plant, for example by a designer or other user familiar with the processing plant. Such data-driven determination(s) may include an indication of whether the processing plant is agile with respect to changes in flowrate and/or product. Additionally or alternatively in some embodiments, such indications include whether changes to product and/or flowrates in operation of the processing plant affect one or more target parameter(s) for optimization. In some embodiments, the apparatus 200 receives user input representing the plant data 802 and/or a portion thereof, retrieves the plant data 802 and/or a portion thereof, and/or the like. Additionally or alternatively, in some embodiments, the apparatus 200 receives a long-horizon optimized plan and/or data thereof for use in navigating the decision tree. For example, in some embodiments, the apparatus 200 receives, retrieves, and/or otherwise at least utilizes the target amount(s) for final product(s), number of final product(s) to be produced, and/or the like, in addition to plant characteristics associated with a processing plant, in the decision tree as described herein. In this regard, the long-horizon optimized plan generated via the long-horizon optimization process guides the short-horizon optimization process utilized in the dual-horizon process as performed.

The apparatus 200 in some embodiments determines a particular short-horizon optimization process to utilize based at least in part on the different data values represented in the plant data 802. For example, the apparatus 200 may be utilized for any number of determination(s), the results of such determinations indicated in plant configuration result data.

As illustrated, the apparatus 200 at determination 804 determines whether a number of blenders in the processing plant is greater than or equal to a number of concurrent products at a particular time. In some embodiments, the number of concurrent products is determined from a long-horizon optimized plan, where the number of concurrent products is equivalent to the number of final products to be generated in accordance with the long-horizon optimization process. The number of blenders may be determined from the plant data 802, for example, or other data retrieved, received, or otherwise identified by the apparatus 200.

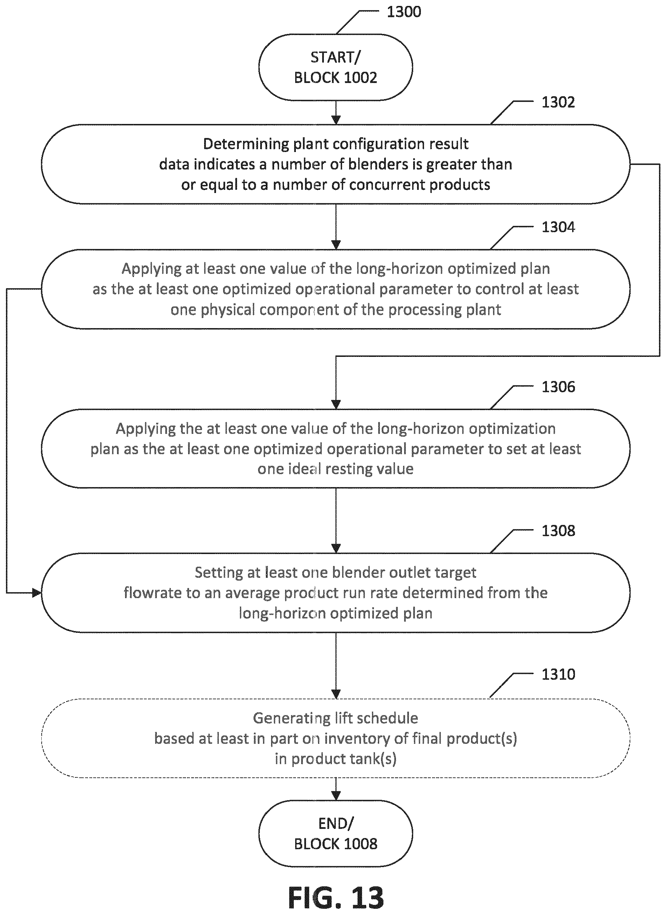

In a circumstance where the apparatus 200 determines that the number of blenders is greater than or equal to a number of concurrent products, the apparatus 200 may utilize a first short-horizon optimization process 808. In some embodiments, the apparatus 200 assigns the processing plant a first data identifier 806, which indicates that the first short-horizon optimization process 808 should be used in dual-horizon optimization for the processing plant. In some embodiments, an example of the first short-horizon optimization process 808 is depicted and described further herein with respect to the process 1300 in FIG. 13.

It will be appreciated that, in some embodiments, the data identifier need not be assigned, or may be updated upon future iterations of the long-horizon optimization process. In this regard, in some embodiments, the short-horizon optimization process utilized changes as the number of concurrent products to be produced, for example, increases or decreases.

In a circumstance where the apparatus 200 determines that the number of blenders is not greater than or equal to a number of concurrent products, the apparatus 200 proceeds to a subsequent determination 810.

At determination 810, the apparatus 200 determines whether the number of blenders is equal to, or in some embodiments greater than or equal to, a number of primary products. In some embodiments, the number of primary products is determined from a long-horizon optimized plan. For example, in some embodiments, each primary product may represent a final product that is associated with a target amount over a particular threshold, or that is above a percentage of the total target amounts of final products to be produced relative to other final products in the long-horizon optimized plan. In some embodiments, the primary products correspond to high-volume products based on the target amounts in the long-horizon optimized plan, and the remaining products that are not high-volume are determined to represent secondary products.

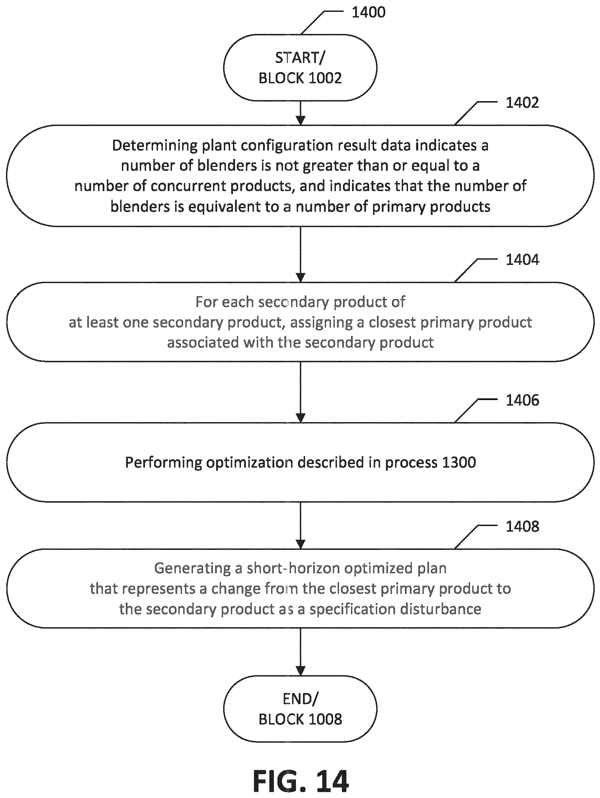

In a circumstance where the apparatus 200 determines that the number of blenders is equal to the number of primary products, the apparatus 200 may utilize a second short-horizon optimization process 814. In some embodiments, the apparatus 200 assigns the processing plant a second data identifier 812, which indicates that the second short-horizon optimization process 814 should be used in dual-horizon optimization for the processing plant. In some embodiments, an example of the second short-horizon optimization process 814 is depicted and described further herein with respect to the process 1400 in FIG. 14.

In a circumstance where the apparatus 200 determines that the number of blenders is not equal to, or in some embodiments not greater than or equal to, the number of primary products, the apparatus 200 proceeds to a subsequent determination 816.

At determination 816, the apparatus 200 determines whether the processing plant is determined to be agile. In some embodiments, a processing plant is agile if it does not lose significant, or in some contexts, any efficiency from changes in product or run rate. In some embodiments, the apparatus 200 retrieves, receives, or otherwise identifiers an input data value indicating whether the processing plant is agile, for example from a designer or user associated with the processing plant. In some embodiments, the apparatus 200 automatically determines whether the processing plant is agile, for example based at least in part on the types of physical components in the processing plant and/or the like, historical data, and/or the like.

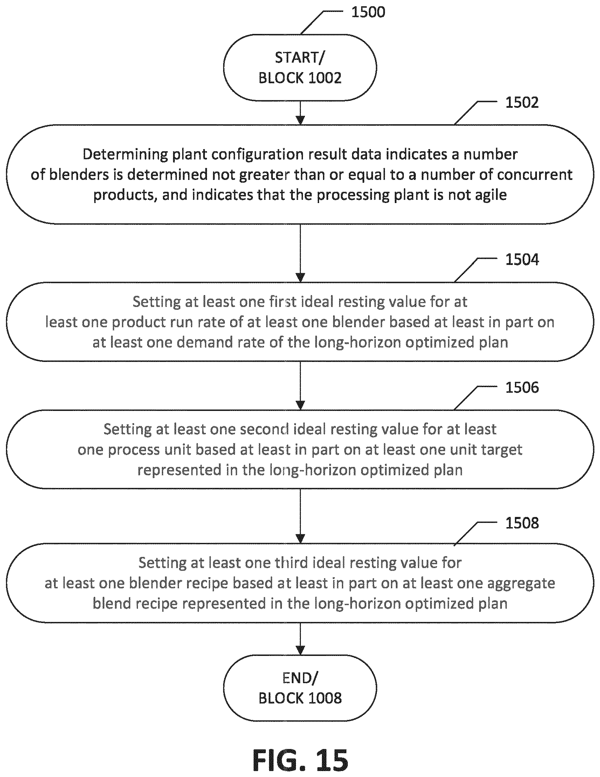

In a circumstance where the apparatus 200 determines that the processing plant is agile, the apparatus 200 may utilize a third short-horizon optimization process 820. In some embodiments, the apparatus 200 assigns the processing plant a third data identifier 818, which indicates that the third short-horizon optimization process 820 should be used in dual-horizon optimization for the processing plant. In some embodiments, an example of the third short-horizon optimization process 818 is depicted and described further herein with respect to the process 1500 in FIG. 15.

In a circumstance where the apparatus 200 determines that the plant is not agile, the apparatus 200 proceeds to a subsequent determination 822.

At determination 822, the apparatus 200 determines whether the processing plant is configured where one or more target parameter(s) is/are susceptible to impact from changing product or changing run-rate. In some embodiments, the apparatus 200 retrieves, receives, or otherwise identifies an input data value indicating whether the processing plant is configured where target parameter(s) is/are susceptible to changes in product or changes in run rate, for example from a designer or user associated with the processing plant. In some embodiments, the apparatus 200 automatically determines whether the processing plant is configured where target parameter(s) is/are susceptible to changes in product or changes in run rate, for example based at least in part on the types of physical components in the processing plant and/or the like, historical data, and/or the like.

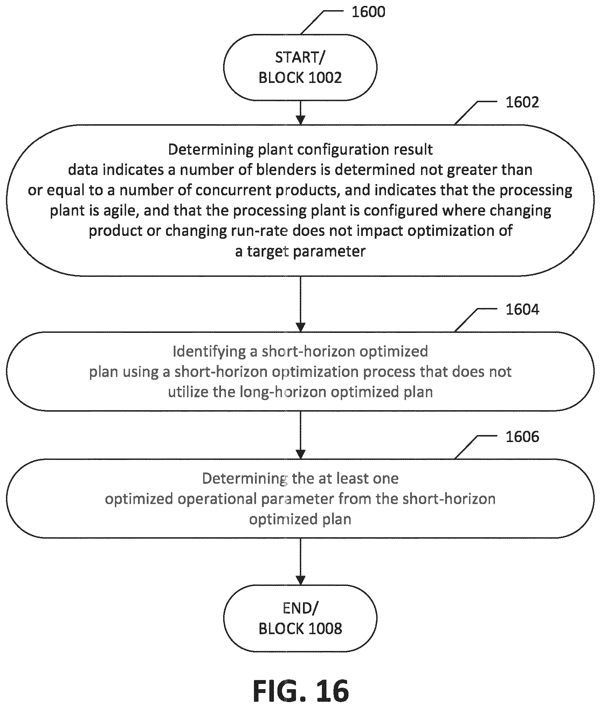

In a circumstance where the apparatus 200 determines that the processing plant is configured where target parameter(s) is/are not susceptible to impact from changing product or changing run-rate, the apparatus 200 may utilize a fourth short-horizon optimization process 826. In some embodiments, the apparatus 200 assigns the processing plant a fourth data identifier 824, which indicates that the fourth short-horizon optimization process 826 should be used in dual-horizon optimization for the processing plant. In some embodiments, an example of the fourth short-horizon optimization process 826 is depicted and described further herein with respect to the process 1600 in FIG. 16.

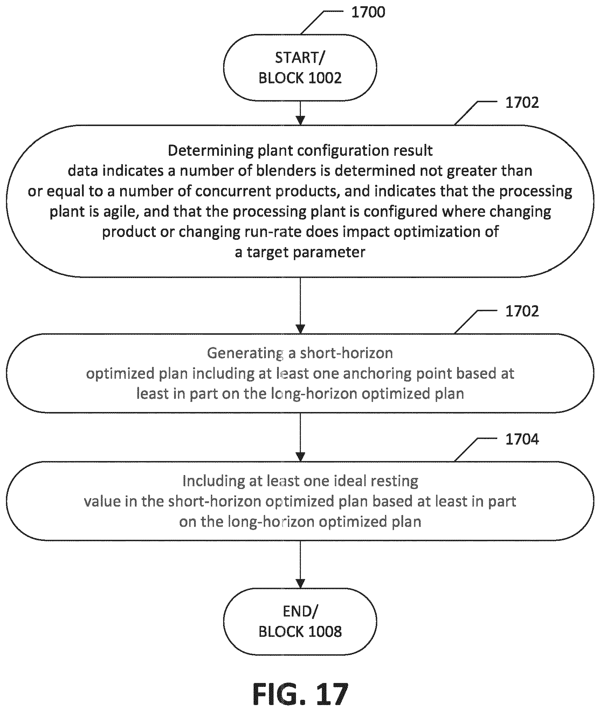

In a circumstance where the apparatus 200 determines that the processing plant is configured where target parameter(s) is/are susceptible to impact from changing product or changing run-rate, the apparatus 200 may utilize a fifth short-horizon optimization process 830. In some embodiments, the apparatus 200 assigns the processing plant a fifth data identifier 828, which indicates that the fifth short-horizon optimization process 830 should be used in dual-horizon optimization for the processing plant. In some embodiments, an example of the fifth short-horizon optimization process 830 is depicted and described further herein with respect to the process 1700 in FIG. 17.

Utilizing the different short-horizon optimization processes, the dual-horizon optimization process enables optimization of the processing plant in a manner that allows maximal absorption of disturbances based on the specific configuration of each processing plant. In this regard, processing plants that are better equipped to absorb disturbances are optimized accordingly, and differently than those that may be less equipped to absorb such disturbances (e.g., due to having a limited number of blenders, older blenders that are less agile, and/or the like)

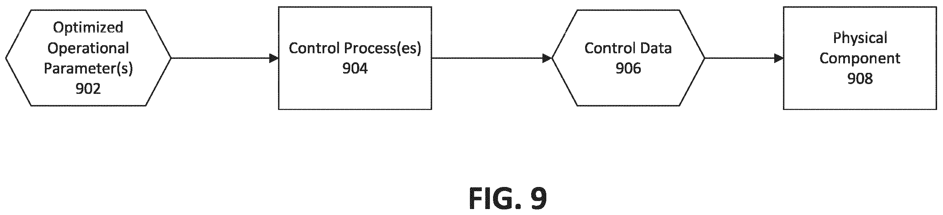

FIG. 9 illustrates a data flow for configuring operation of a physical component in accordance with at least one example embodiment of the present disclosure. In some embodiments, the configured operation of the physical component causes operation of the physical component in accordance with a particular operation, for example to operate the physical component in a manner that optimizes one or more target parameter(s) as indicated by one or more optimized operational parameter(s). The optimized operational parameter(s) may be generated via the dual-horizon optimization process(es) described herein.

As illustrated, optimized operational parameter(s) 902 are utilized or otherwise applied to one or more control process(es) 904. In some embodiments, the optimized operational parameter(s) 902 includes at least one optimized operational parameter determined via one or more dual-horizon optimization process(es). In some embodiments, the optimized operational parameter(s) 902 represent optimized amounts of a plurality of final products to be produced via a processing plant over a particular timestamp interval to maximize one or more target parameter(s). The optimized operational parameter(s) 902 may be generated by, stored to, and/or otherwise maintained by the apparatus 200.

The control process(es) 904 embody, include, or otherwise initiate particular process(es) for controlling operation of a particular physical component or a plurality of physical components. In some embodiments, the control process(es) 904 generates particular control data 906 that causes a physical component to operate in a particular manner defined by the control data 906. For example, in some embodiments, a user inputs data via the control process(es) 904 that indicates a configurable mode to be activated on a particular physical component, causing the physical component to operate in accordance with the selected mode. In one example context, a user may provide particular user input that initiates the control process(es) 904, which generates control data 906 that configures a physical component to perform in accordance with a selected mode to generate a particular final product during a particular time slice. In some embodiments, the control process(es) 904 are initiated via a particular user-facing interface associated with the processing plant. In some embodiments, the user-facing interface is generated by the apparatus 200 based at least in part on external representation(s) corresponding to the processing plant.

As illustrated, the control data 906 is transmitted or otherwise provided to physical component 908. In some embodiments, the control data 906 is transmitted to the physical component 908 to cause the physical component to alter its configuration(s) and/or mode of operation. In this regard, the control data 906 in some embodiments causes operation of the physical component 908 in accordance with a particular selected mode, for example to produce a particular desired final product via one or more downstream and/or upstream physical component(s) to a particular product tank in the context of rundown blending.

It should be appreciated that a plurality of physical components may be updated at once. For example, in some embodiments, control data is transmitted and/or otherwise provided to a plurality of physical components embodying different rundown blenders and/or upstream physical component(s) thereof to configure the rundown blenders to produce a particular final product in real-time based on input product(s) received from the upstream component(s). In this regard, the operation of such rundown blenders enables simultaneous real-time production of final products in a manner that optimizes in accordance with the results of the dual-horizon optimization process as performed, for example to optimize in accordance with the optimized operational parameter(s) 902.

### EXAMPLE PROCESSES OF THE DISCLOSURE

Having described example systems and apparatuses, data representations and visualizations, and data flows in accordance with the disclosure, example processes of the disclosure will now be discussed. It will be appreciated that each of the flowcharts depicts an example computer-implemented process that is performable by one or more of the apparatuses, systems, devices, and/or computer program products described herein, for example utilizing one or more of the specially configured components thereof.

The blocks indicate operations of each process. Such operations may be performed in any of a number of ways, including, without limitation, in the order and manner as depicted and described herein. In some embodiments, one or more blocks of any of the processes described herein occur in-between one or more blocks of another process, before one or more blocks of another process, in parallel with one or more blocks of another process, and/or as a sub-process of a second process. Additionally or alternatively, any of the processes in various embodiments include some or all operational steps described and/or depicted, including one or more optional blocks in some embodiments. With regard to the flowcharts illustrated herein, one or more of the depicted block(s) in some embodiments is/are optional in some, or all, embodiments of the disclosure. Optional blocks are depicted with broken (or "dashed") lines. Similarly, it should be appreciated that one or more of the operations of each flowchart may be combinable, replaceable, and/or otherwise altered as described herein.

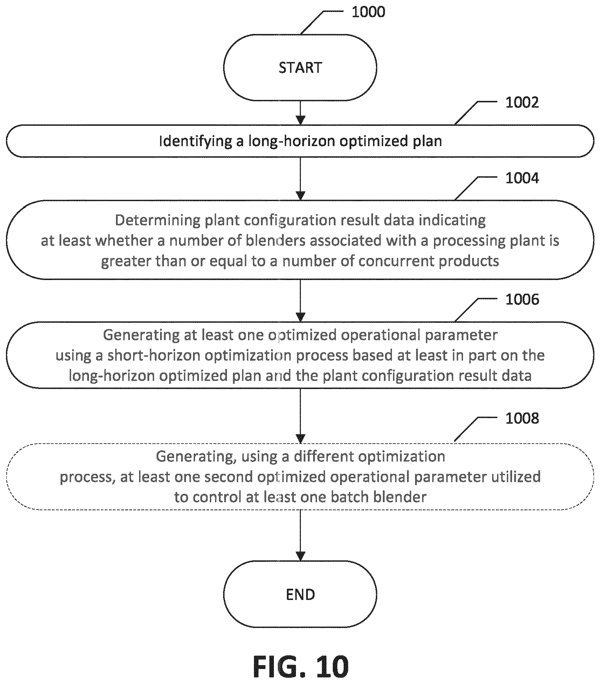

FIG. 10 illustrates a flowchart including operations of an example process for processing multiple representations of a processing plant in accordance with at least one example embodiment of the present disclosure. Specifically, FIG. 10 depicts operations of an example process 800. In some embodiments, the process 1000 is embodied by computer program code stored on a non-transitory computer-readable storage medium of a computer program product configured for execution to perform the process as depicted and described. Alternatively or additionally, in some embodiments, the process 1000 is performed by one or more specially configured computing devices, such as the apparatus 200 alone or in communication with one or more other component(s), device(s), system(s), and/or the like. In this regard, in some such embodiments, the apparatus 200 is specially configured by computer-coded instructions (e.g., computer program instructions) stored thereon, for example in the memory 204 and/or another component depicted and/or described herein and/or otherwise accessible to the apparatus 200, for performing the operations as depicted and described. In some embodiments, the apparatus 200 is in communication with one or more external apparatus(es), system(s), device(s), and/or the like, to perform one or more of the operations as depicted and described. For example, the apparatus 200 in some embodiments is in communication with at least one apparatus, at least one physical component, at least one processing plant system, a scheduling system, and/or the like. For purposes of simplifying the description, the process 1000 is described as performed by and from the perspective of the apparatus 200.

At operation 1002, the apparatus 200 includes means such as the long-horizon optimization circuitry 210, short-horizon optimization circuitry 212, control circuitry 214, lift circuitry 216, communications circuitry 208, input/output circuitry 206, processor 202, and/or the like, or a combination thereof, that identifies a long-horizon optimized plan. The long-horizon optimized plan is generated via a long-horizon optimization process. In some embodiments, the apparatus 200 retrieves a stored long-horizon optimized plan, for example previously generated by the apparatus 200 or transmitted to the apparatus 200. In some embodiments, the apparatus 200 generates the long-horizon optimized plan utilizing a long-horizon optimization process executed via the apparatus 200.

At operation 1004, the apparatus 200 includes means such as the long-horizon optimization circuitry 210, short-horizon optimization circuitry 212, control circuitry 214, lift circuitry 216, communications circuitry 208, input/output circuitry 206, processor 202, and/or the like, or a combination thereof, that determines plant configuration result data. In some embodiments, the plant configuration result data includes one or more data associated with configuration, physical layout, and/or other aspects of a processing plant and/or physical components thereof. In some embodiments, the plant configuration result data indicates at least whether a number of blenders associated with a processing plant is greater than or equal to a number of concurrent products. Additionally or alternatively, in some embodiments, the plant configuration result data indicates whether a processing plant is agile. Additionally or alternatively, in some embodiments, the plant configuration result data indicates whether the processing plant, and/or one or more physical component(s) of the processing plant, is impacted by changes in product and/or changes in flow rate. The plant configuration result data includes a data identifier from a set of candidate data identifiers, each indicating different configurations of the processing plant and/or determines regarding aspects thereof.

At operation 1006, the apparatus 200 includes means such as the long-horizon optimization circuitry 210, short-horizon optimization circuitry 212, control circuitry 214, lift circuitry 216, communications circuitry 208, input/output circuitry 206, processor 202, and/or the like, or a combination thereof, that generates at least one optimized operational parameter using at least a short-horizon optimization process. The at least one optimized operational parameter is generated based at least in part on the long-horizon optimized plan and the plant configuration result data. For example, in some embodiments the long-horizon optimized plan is utilized as input to the short-horizon optimized plan, and/or the plant configuration result data is utilized as input to the short-horizon optimized plan. Additionally or alternatively, in some embodiments, the apparatus 200 identifies the short-horizon optimized plan based at least in part on the plant configuration result data and/or other data accessible to the apparatus 200.

At optional operation 1008, the apparatus 200 includes means such as the long-horizon optimization circuitry 210, short-horizon optimization circuitry 212, control circuitry 214, lift circuitry 216, communications circuitry 208, input/output circuitry 206, processor 202, and/or the like, or a combination thereof, that generates, using a different optimization process, at least one second optimized operational parameter utilized to control at least one batch blender. For example, in some embodiments, the apparatus 200 utilizes only a long-horizon optimization process to generate additional optimized operational parameter(s) utilized to control the batch blender(s) of the processing plant. In some embodiments, the apparatus 200 utilizes the at least one generated optimized operational parameter(s) to control at least one rundown blender of the apparatus 200.

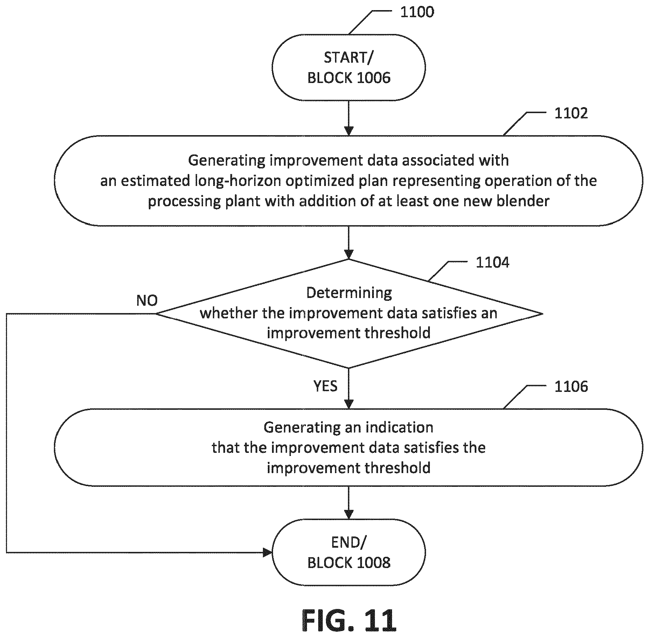

FIG. 11 illustrates a flowchart including operations of an example process for generating an indication of a recommended plant improvement. Specifically, FIG. 11 depicts operations of an example process 1100. For example, in some embodiments the apparatus 200 performs the process 1100 as part of an example process for generating optimized operational parameter(s) using a dual-horizon optimization process in accordance with at least an example embodiment of the present disclosure. In some embodiments, the process 1100 is embodied by computer program code stored on a non-transitory computer-readable storage medium of a computer program product configured for execution to perform the process as depicted and described. Alternatively or additionally, in some embodiments, the process 1100 is performed by one or more specially configured computing devices, such as the apparatus 200 alone or in communication with one or more other component(s), device(s), system(s), and/or the like. In this regard, in some such embodiments, the apparatus 200 is specially configured by computer-coded instructions (e.g., computer program instructions) stored thereon, for example in the memory 204 and/or another component depicted and/or described herein and/or otherwise accessible to the apparatus 200, for performing the operations as depicted and described. In some embodiments, the apparatus 200 is in communication with one or more external apparatus(es), system(s), device(s), and/or the like, to perform one or more of the operations as depicted and described. For example, the apparatus 200 in some embodiments is in communication with at least one apparatus, at least one sensor associated with the at least one apparatus, at least one end-user computing device, and/or in some embodiments an optional external control system. For purposes of simplifying the description, the process 1100 is described as performed by and from the perspective of the apparatus 200.

The process 1100 begins at operation 1102. In some embodiments, the process 1100 begins after one or more operations depicted and/or described with respect to any one of the other processes described herein. For example, in some embodiments as depicted, the process 1100 begins after execution of operation 1006. In this regard, some or all of the process 1100 may replace or supplement one or more blocks depicted and/or described with respect to any of the processes described herein. Upon completion of the process 1100, the flow of operations may terminate. Additionally or alternatively, as depicted, upon completion of the process 1000 in some embodiments, flow may return to one or more operation(s) of another process, such as the operation 1008. It will be appreciated that, in some embodiments, the process 1100 embodies a sub-process of one or more other process(es) depicted and/or described herein, for example the process 1000.

At operation 1102, the apparatus 200 includes means such as the long-horizon optimization circuitry 210, short-horizon optimization circuitry 212, control circuitry 214, lift circuitry 216, communications circuitry 208, input/output circuitry 206, processor 202, and/or the like, or a combination thereof, that generates improvement data associated with an estimated long-horizon optimized plan. In some embodiments, the estimated long-horizon optimized plan represents operation of a processing plant with addition of at least one new blender. In this regard, in some embodiments, the improvement data represents an improvement of a target parameter that is estimated to result from addition of the at least one new blender to the processing plant. In one example embodiment, a second instance of the long-horizon optimization process is initiated based upon an updated virtual representation of the processing plant that includes a virtual representation of the at least one new blender. In one example context, the improvement data represents an increase or decrease in the target parameter, for example an increase in profitability based upon adding the at least one new blender to the processing plant.

At operation 1104, the apparatus 200 includes means such as the long-horizon optimization circuitry 210, short-horizon optimization circuitry 212, control circuitry 214, lift circuitry 216, communications circuitry 208, input/output circuitry 206, processor 202, and/or the like, or a combination thereof, that determines whether the improvement data satisfies an improvement threshold. In some embodiments, the improvement threshold is determinable via the apparatus 200, for example as a predetermined value, from a data repository accessible via the apparatus 200, and/or the like. In some embodiments, the apparatus 200 compares the improvement data to the improvement threshold to determine whether the improvement data satisfies said improvement threshold. In some such embodiments, the apparatus 200 determines that the improvement data satisfies the improvement threshold in a circumstance where the improvement data exceeds or is equal to the improvement threshold, or exceeds the improvement threshold in other embodiments.

In circumstances where the apparatus 200 determines that the improvement data does not satisfy the improvement threshold, the flow proceeds to the end of process 1100. Alternatively, in circumstances where the apparatus 200 determines that the improvement data satisfies the improvement threshold, the flow proceeds to operation 1106.

At operation 1106, the apparatus 200 includes means such as the long-horizon optimization circuitry 210, short-horizon optimization circuitry 212, control circuitry 214, lift circuitry 216, communications circuitry 208, input/output circuitry 206, processor 202, and/or the like, or a combination thereof, that generates an indication that the improvement data satisfies the improvement threshold. In some embodiments, the indication includes a message or other audio, visual, text, or other indicator that represents that the improvement data satisfies the indication threshold. In some embodiments, the indication includes a recommendation that the at least one new blender be added to the processing plant. In some embodiments, the indication is generated as a user interface, push notification, email, text message, and/or the like.

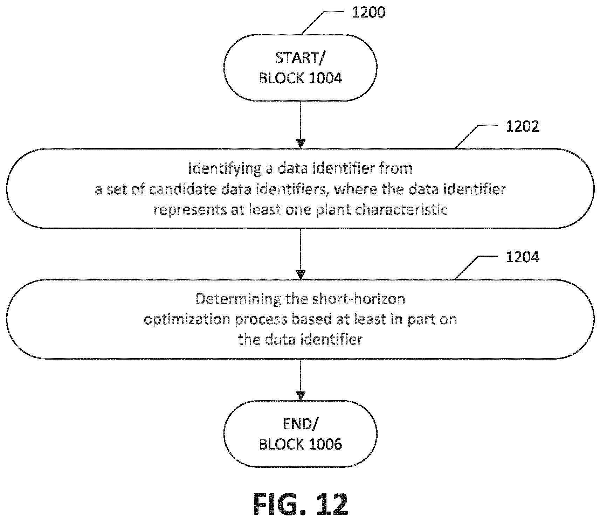

FIG. 12 illustrates a flowchart including operations of an example process for determining a short-horizon optimization process for use, for example as part of an example process for generating optimized operational parameter(s) using a dual-horizon optimization process in accordance with at least an example embodiment of the present disclosure. Specifically, FIG. 12 depicts operations of an example process 1200. For example, in some embodiments the apparatus 200 performs the process 1200 as part of an example process for generating optimized operational parameter(s) using a dual-horizon optimization process in accordance with at least an example embodiment of the present disclosure. In some embodiments, the process 1200 is embodied by computer program code stored on a non-transitory computer-readable storage medium of a computer program product configured for execution to perform the process as depicted and described. Alternatively or additionally, in some embodiments, the process 1200 is performed by one or more specially configured computing devices, such as the apparatus 200 alone or in communication with one or more other component(s), device(s), system(s), and/or the like. In this regard, in some such embodiments, the apparatus 200 is specially configured by computer-coded instructions (e.g., computer program instructions) stored thereon, for example in the memory 204 and/or another component depicted and/or described herein and/or otherwise accessible to the apparatus 200, for performing the operations as depicted and described. In some embodiments, the apparatus 200 is in communication with one or more external apparatus(es), system(s), device(s), and/or the like, to perform one or more of the operations as depicted and described. For example, the apparatus 200 in some embodiments is in communication with at least one apparatus, at least one sensor associated with the at least one apparatus, at least one end-user computing device, and/or in some embodiments an optional external control system. For purposes of simplifying the description, the process 1200 is described as performed by and from the perspective of the apparatus 200.

The process 1200 begins at operation 1202. In some embodiments, the process 1200 begins after one or more operations depicted and/or described with respect to any one of the other processes described herein. For example, in some embodiments as depicted, the process 1200 begins after execution of operation 1004. In this regard, some or all of the process 1200 may replace or supplement one or more blocks depicted and/or described with respect to any of the processes described herein. Upon completion of the process 1200, the flow of operations may terminate. Additionally or alternatively, as depicted, upon completion of the process 1200 in some embodiments, flow may return to one or more operation(s) of another process, such as the operation 1006. It will be appreciated that, in some embodiments, the process 1200 embodies a sub-process of one or more other process(es) depicted and/or described herein, for example the process 1000.

At operation 1202, the apparatus 200 includes means such as the long-horizon optimization circuitry 210, short-horizon optimization circuitry 212, control circuitry 214, lift circuitry 216, communications circuitry 208, input/output circuitry 206, processor 202, and/or the like, or a combination thereof, that identifies a data identifier from a set of candidate data identifiers. In some embodiments, the data identifier corresponds to a mode determinable based at least in part on the results of any number of determinations based at least in part on the configuration of a processing plant. For example, in some embodiments, the set of candidate data identifiers includes a first data identifier indicating whether a configuration of a processing plant includes a number of blenders greater than or equal to a number of concurrent products defined based at least in part on a long-horizon optimized plan, whether a processing plant includes a number of blenders equal to a number of primary products defined based at least in part on a long-horizon optimized plan, whether a processing plant is agile, and/or whether a processing plant is configured where changing product or changing run-rate impacts optimization of at least one target parameter.

At operation 1204, the apparatus 200 includes means such as the long-horizon optimization circuitry 210, short-horizon optimization circuitry 212, control circuitry 214, lift circuitry 216, communications circuitry 208, input/output circuitry 206, processor 202, and/or the like, or a combination thereof, that determines a short-horizon optimization process based at least in part on the data identifier. In some embodiments, the apparatus 200 stores each data identifier associated with a particular short-horizon optimization process. In this regard, the apparatus 200 in some embodiments utilizes the data identifier to retrieve the short-horizon optimization process associated with that data identifier. In some embodiments, the apparatus 200 initiates a particular function representing a particular short-horizon optimization process utilizing the data identifier as a trigger to determine and initiate the appropriate short-horizon optimization process associated with the data identifier.

FIG. 13 illustrates a flowchart including operations of an example process for generating optimized operational parameter(s) using a first short-horizon optimization process. Specifically, FIG. 13 depicts operations of an example process 1300. In some embodiments, the process 1300 represents different short-horizon optimization process(es) initiated as part of a dual-horizon optimization process, for example when plant configuration result data indicates a number of blenders is greater than or equal to a number of concurrent products. For example, in some embodiments the apparatus 200 performs the process 1300 as part of an example process for generating optimized operational parameter(s) using a dual-horizon optimization process in accordance with at least an example embodiment of the present disclosure. In some embodiments, the process 1300 is embodied by computer program code stored on a non-transitory computer-readable storage medium of a computer program product configured for execution to perform the process as depicted and described. Alternatively or additionally, in some embodiments, the process 1300 is performed by one or more specially configured computing devices, such as the apparatus 200 alone or in communication with one or more other component(s), device(s), system(s), and/or the like. In this regard, in some such embodiments, the apparatus 200 is specially configured by computer-coded instructions (e.g., computer program instructions) stored thereon, for example in the memory 204 and/or another component depicted and/or described herein and/or otherwise accessible to the apparatus 200, for performing the operations as depicted and described. In some embodiments, the apparatus 200 is in communication with one or more external apparatus(es), system(s), device(s), and/or the like, to perform one or more of the operations as depicted and described. For example, the apparatus 200 in some embodiments is in communication with at least one apparatus, at least one sensor associated with the at least one apparatus, at least one end-user computing device, and/or in some embodiments an optional external control system. For purposes of simplifying the description, the process 1300 is described as performed by and from the perspective of the apparatus 200.

The process 1300 begins at operation 1302. In some embodiments, the process 1300 begins after one or more operations depicted and/or described with respect to any one of the other processes described herein. For example, in some embodiments as depicted, the process 1300 begins after execution of operation 1002. In this regard, some or all of the process 1300 may replace or supplement one or more blocks depicted and/or described with respect to any of the processes described herein. Upon completion of the process 1300, the flow of operations may terminate. Additionally or alternatively, as depicted, upon completion of the process 1300 in some embodiments, flow may return to one or more operation(s) of another process, such as the operation 1000. It will be appreciated that, in some embodiments, the process 1300 embodies a sub-process of one or more other process(es) depicted and/or described herein, for example the process 1000.

At operation 1302, the apparatus 200 includes means such as the long-horizon optimization circuitry 210, short-horizon optimization circuitry 212, control circuitry 214, lift circuitry 216, communications circuitry 208, input/output circuitry 206, processor 202, and/or the like, or a combination thereof, that determines plant configuration result data indicates a number of blenders is greater than or equal to a number of concurrent products. In some embodiments, the apparatus 200 determines the number of concurrent products from a long-horizon optimized plan, for example generated via a long-horizon optimization process. Additionally or alternatively, in some embodiments, the apparatus 200 determines the plant configuration result indicating the number of blenders based at least in part on configuration data and/or external representation data indicating a physical layout of the processing plant itself. In some embodiments the apparatus 200 determines that the number of blenders is greater than or equal to the number of concurrent products represented in the long-horizon optimized plan, for example corresponding to the number of final products in the long-horizon optimized plan.

In some embodiments, the flow proceeds to operation 1304. In other embodiments, flow proceeds to 1306. The flow may proceed based on configuration of the apparatus 200.

At operation 1304, the apparatus 200 includes means such as the long-horizon optimization circuitry 210, short-horizon optimization circuitry 212, control circuitry 214, lift circuitry 216, communications circuitry 208, input/output circuitry 206, processor 202, and/or the like, or a combination thereof, that applies at least one value of the long-horizon optimized plan as the at least one optimized operational parameter to control at least one physical component of the processing plant. In some embodiments, the at least one physical component is applied directly to the at least one physical component, causing the at least one physical component to cause the at least one physical component to operate in accordance with the long-horizon optimized plan. For example, in some embodiments, a user directly applies time slices to configure the physical component(s) in accordance with the long-horizon optimized plan.

At operation 1306, the apparatus 200 includes means such as the long-horizon optimization circuitry 210, short-horizon optimization circuitry 212, control circuitry 214, lift circuitry 216, communications circuitry 208, input/output circuitry 206, processor 202, and/or the like, or a combination thereof, that applies the at least one value of the long-horizon optimized plan as the at least one optimized operational parameter to set at least one ideal resting value. In this regard, in some such embodiments, the apparatus 200 utilizes the values derived from the long-horizon optimized plan as ideal resting values for one or more physical component(s). In this regard, such physical component(s) may be operated based at least in part on such ideal resting value(s).

At operation 1308, the apparatus 200 includes means such as the long-horizon optimization circuitry 210, short-horizon optimization circuitry 212, control circuitry 214, lift circuitry 216, communications circuitry 208, input/output circuitry 206, processor 202, and/or the like, or a combination thereof, that sets at least one blender outlet target flowrate to an average product run rate. the average product run rate may be determined associated with a particular timestamp interval, for example the next m-days. in some embodiments, the average product run rate is determined based at least in part on the long-horizon optimized plan. for example, in some embodiments the outlet target flowrate(s) are set to the m-day average product run rate(s) derived from the values in the long-horizon optimized plan for each target product.

At operation 1310, the apparatus 200 includes means such as the long-horizon optimization circuitry 210, short-horizon optimization circuitry 212, control circuitry 214, lift circuitry 216, communications circuitry 208, input/output circuitry 206, processor 202, and/or the like, or a combination thereof, that generates a lift schedule based at least in part on an inventory of final product(s) in one or more product tank(s). In this regard, the apparatus 200 may generate the lift schedule such that no product tank overflows or underflows.

In some embodiments, the apparatus 200 performs the same asynchronous inventory updating on the final product inventories. In this regard, in some embodiments the apparatus tracks and updates the final products as they are lifted (for example, as opposed to spent components) asynchronously. Such asynchronous inventory updating enables rolling in or rolling out of a final product in a determination of aggregated m-day demands during the dual-horizon optimization process.

In some embodiments, the apparatus 200 utilizes the long-horizon optimized plan to set the m-day optimal target for processing units. Additionally or alternatively, in some embodiments, the apparatus 200 utilizes the long-horizon optimized plan to set the m-day optimal recipes for each blender in the processing plant. Additionally or alternatively, in some embodiments, the apparatus 200 utilizes the long-horizon optimized plan to set the product run - rate to the m-day demand rate indicated therein.

In some embodiments, a lift schedule is generatable based at least in part on the results of the dual-horizon optimization process. For example, in some embodiments, a lift schedule is set based on the current availability and future inventories in the product tanks, for example indicated based at least in part on the short-horizon optimized plan and/or the long-horizon optimized plan. In this regard, the lift schedule may be generated such that none of the product tanks overflow or underflow based on the current inventories and future optimized plan.

FIG. 14 illustrates a flowchart including operations of an example process for generating optimized operational parameter(s) using a second short-horizon optimization process. Specifically, FIG. 14 depicts operations of an example process 1400. In some embodiments, the process 1400 represents a different short-horizon optimization process initiated as part of a dual-horizon optimization process, for example when plant configuration result data indicates a number of blenders is not greater than or equal to a number of concurrent products, and indicates that the number of blenders is equivalent to a number of primary products. For example, in some embodiments the apparatus 200 performs the process 1400 as part of an example process for generating optimized operational parameter(s) using a dual-horizon optimization process in accordance with at least an example embodiment of the present disclosure. In some embodiments, the process 1400 is embodied by computer program code stored on a non-transitory computer-readable storage medium of a computer program product configured for execution to perform the process as depicted and described. Alternatively or additionally, in some embodiments, the process 1400 is performed by one or more specially configured computing devices, such as the apparatus 200 alone or in communication with one or more other component(s), device(s), system(s), and/or the like. In this regard, in some such embodiments, the apparatus 200 is specially configured by computer-coded instructions (e.g., computer program instructions) stored thereon, for example in the memory 204 and/or another component depicted and/or described herein and/or otherwise accessible to the apparatus 200, for performing the operations as depicted and described. In some embodiments, the apparatus 200 is in communication with one or more external apparatus(es), system(s), device(s), and/or the like, to perform one or more of the operations as depicted and described. For example, the apparatus 200 in some embodiments is in communication with at least one apparatus, at least one sensor associated with the at least one apparatus, at least one end-user computing device, and/or in some embodiments an optional external control system. For purposes of simplifying the description, the process 1400 is described as performed by and from the perspective of the apparatus 200.

The process 1400 begins at operation 1402. In some embodiments, the process 1400 begins after one or more operations depicted and/or described with respect to any one of the other processes described herein. For example, in some embodiments as depicted, the process 1400 begins after execution of operation 1002. In this regard, some or all of the process 1400 may replace or supplement one or more blocks depicted and/or described with respect to any of the processes described herein. Upon completion of the process 1400, the flow of operations may terminate. Additionally or alternatively, as depicted, upon completion of the process 1400 in some embodiments, flow may return to one or more operation(s) of another process, such as the operation 1000. It will be appreciated that, in some embodiments, the process 1400 embodies a sub-process of one or more other process(es) depicted and/or described herein, for example the process 1000.

At operation 1402, the apparatus 200 includes means such as the long-horizon optimization circuitry 210, short-horizon optimization circuitry 212, control circuitry 214, lift circuitry 216, communications circuitry 208, input/output circuitry 206, processor 202, and/or the like, or a combination thereof, that determines that plant configuration result data indicates a number of blenders is not greater than or equal to a number of concurrent products, and indicates that the number of blenders is equivalent to a number of primary products. In some embodiments, the apparatus 200 utilizes a data identifier assigned to the processing plant to perform such determinations, for example by determining the data identifier is a certain value where different values of the data identifier represent different possible combinations of plant configuration result data.

In some embodiments, the apparatus 200 determines the number of concurrent products from a long-horizon optimized plan, for example generated via a long-horizon optimization process. Additionally or alternatively, in some embodiments, the apparatus 200 determines the plant configuration result indicating the number of blenders based at least in part on configuration data and/or external representation data indicating a physical layout of the processing plant itself. In some embodiments the apparatus 200 determines that the number of blenders is not greater than or equal to the number of concurrent products represented in the long-horizon optimized plan, for example corresponding to the number of final products in the long-horizon optimized plan.

In some embodiments, the apparatus 200 determines the number of primary products based at least in part on the target amounts of each final product represented in the long-horizon optimized plan. In some embodiments, each primary product corresponds to a target amount greater than a target product threshold. Alternatively or additionally, in some embodiments, the determination of primary products is relative with respect to the target amounts of other final products. For example, in some embodiments, a primary product exceeds a certain percentage of the total target amount for all final products, and/or a certain percentage difference above the target amount for a different final product. In this regard, the apparatus 200 may determine primary products that satisfy one or more such condition(s), and secondary products that do not satisfy such conditions.

At operation 1404, the apparatus 200 includes means such as the long-horizon optimization circuitry 210, short-horizon optimization circuitry 212, control circuitry 214, lift circuitry 216, communications circuitry 208, input/output circuitry 206, processor 202, and/or the like, or a combination thereof, that, for each secondary product of at least one secondary product, assigns a closest primary product associated with the secondary product. In some embodiments, the at least one secondary product represents each final product in the long0-horizon optimization plan that is not determined as a primary product, as described above. In some embodiments, a secondary product is assigned a closest primary product based at least in part on closeness in specification between the products. For example, the apparatus 200 may identify (automatically or based at least in part on user input linking final products in closeness) which products are closest in specification. In some embodiments, the apparatus 200 maintains a datastore that includes the assignment between a particular product and at least one closest other product, such that this data is retrievable for use in operation 1404. In this regard, the secondary products that are of a determinably low volume are swept into the demand associated with the closest primary product assigned to that secondary product.

At operation 1406, the apparatus 200 includes means such as the long-horizon optimization circuitry 210, short-horizon optimization circuitry 212, control circuitry 214, lift circuitry 216, communications circuitry 208, input/output circuitry 206, processor 202, and/or the like, or a combination thereof, that performs the optimization described in process 1300. In this regard, the apparatus 200 may treat the long-horizon optimization as though the number of blenders is equal to the number of concurrent products, since the secondary products representing the lower-volume or minor products have been swept into the primary products through such assignment. In some embodiments, the resulting product generates an initial short-horizon optimized plan as described.

At operation 1408, the apparatus 200 includes means such as the long-horizon optimization circuitry 210, short-horizon optimization circuitry 212, control circuitry 214, lift circuitry 216, communications circuitry 208, input/output circuitry 206, processor 202, and/or the like, or a combination thereof, that generates a short-horizon optimized plan that represents a change from the closest primary product to the secondary product as a specification disturbance. In this regard, as the specifications between the secondary product and the assigned closest primary product should not be that different, the disturbance should be handled in a manner that minimally affects the operation of the processing plant. Additionally, since the long-horizon optimized plan in some embodiments already optimizes for global production volume, there exists no volume disturbance to further minimize the impact of such a disturbance on operation of the processing plant. It will be appreciated that handling disturbances in a processing plant, for example in an oil refinery, may be handled utilizing any of a myriad of known and/or custom disturbance handling process(es).

In some embodiments, the apparatus 200 utilizes the long-horizon optimized plan to set the m-day optimal target for processing units. Additionally or alternatively, in some embodiments, the apparatus 200 utilizes the long-horizon optimized plan to set the m-day optimal recipes for each blender in the processing plant. Additionally or alternatively, in some embodiments, the apparatus 200 utilizes the long-horizon optimized plan to set the product run - rate to the m-day demand rate indicated therein.

In some embodiments, a lift schedule is generatable based at least in part on the results of the dual-horizon optimization process. For example, in some embodiments, a lift schedule is set based on the current availability and future inventories in the product tanks, for example indicated based at least in part on the short-horizon optimized plan and/or the long-horizon optimized plan. In this regard, the lift schedule may be generated such that none of the product tanks overflow or underflow based on the current inventories and future optimized plan.

FIG. 15 illustrates a flowchart including operations of an example process for generating optimized operational parameter(s) using a third short-horizon optimization process. Specifically, FIG. 15 depicts operations of an example process 1500. In some embodiments, the process 1500 represents a different short-horizon optimization process initiated as part of a dual-horizon optimization process, for example when plant configuration result data indicates a number of blenders is not greater than or equal to a number of concurrent products, and indicates that the processing plant is not agile. For example, in some embodiments the apparatus 200 performs the process 1500 as part of an example process for generating optimized operational parameter(s) using a dual-horizon optimization process in accordance with at least an example embodiment of the present disclosure. In some embodiments, the process 1500 is embodied by computer program code stored on a non-transitory computer-readable storage medium of a computer program product configured for execution to perform the process as depicted and described. Alternatively or additionally, in some embodiments, the process 1500 is performed by one or more specially configured computing devices, such as the apparatus 200 alone or in communication with one or more other component(s), device(s), system(s), and/or the like. In this regard, in some such embodiments, the apparatus 200 is specially configured by computer-coded instructions (e.g., computer program instructions) stored thereon, for example in the memory 204 and/or another component depicted and/or described herein and/or otherwise accessible to the apparatus 200, for performing the operations as depicted and described. In some embodiments, the apparatus 200 is in communication with one or more external apparatus(es), system(s), device(s), and/or the like, to perform one or more of the operations as depicted and described. For example, the apparatus 200 in some embodiments is in communication with at least one apparatus, at least one sensor associated with the at least one apparatus, at least one end-user computing device, and/or in some embodiments an optional external control system. For purposes of simplifying the description, the process 1500 is described as performed by and from the perspective of the apparatus 200.

The process 1500 begins at operation 1502. In some embodiments, the process 1500 begins after one or more operations depicted and/or described with respect to any one of the other processes described herein. For example, in some embodiments as depicted, the process 1500 begins after execution of operation 1002. In this regard, some or all of the process 1500 may replace or supplement one or more blocks depicted and/or described with respect to any of the processes described herein. Upon completion of the process 1500, the flow of operations may terminate. Additionally or alternatively, as depicted, upon completion of the process 1500 in some embodiments, flow may return to one or more operation(s) of another process, such as the operation 1000. It will be appreciated that, in some embodiments, the process 1500 embodies a sub-process of one or more other process(es) depicted and/or described herein, for example the process 1000.

At operation 1502, the apparatus 200 includes means such as the long-horizon optimization circuitry 210, short-horizon optimization circuitry 212, control circuitry 214, lift circuitry 216, communications circuitry 208, input/output circuitry 206, processor 202, and/or the like, or a combination thereof, that determines that plant configuration result data indicates a number of blenders is not greater than or equal to a number of concurrent products, and indicates that the processing plant is not agile. In some embodiments, the apparatus 200 utilizes a data identifier assigned to the processing plant to perform such determinations, for example by determining the data identifier is a certain value where different values of the data identifier represent different possible combinations of plant configuration result data.

In some embodiments, the apparatus 200 determines the number of concurrent products from a long-horizon optimized plan, for example generated via a long-horizon optimization process. Additionally or alternatively, in some embodiments, the apparatus 200 determines the plant configuration result indicating the number of blenders based at least in part on configuration data and/or external representation data indicating a physical layout of the processing plant itself. In some embodiments the apparatus 200 determines that the number of blenders is not greater than or equal to the number of concurrent products represented in the long-horizon optimized plan, for example corresponding to the number of final products in the long-horizon optimized plan.

In some embodiments, the apparatus 200 receives, retrieves, or otherwise identifies a data identifier that indicates whether a particular processing plant is agile. For example, in some embodiments, the apparatus 200 maintains a datastore including data identifier(s) indicating whether a particular plant is agile or not agile, and retrieves such a data identifier for use at 1502. In some embodiments, the data identifier is generated by a designer, administrator, or other user who has knowledge of the processing plant, observes the processing plant, and/or the like so as to determine whether the plant is agile. A processing plant not being agile in some embodiments indicates that the processing plant is much more optimized for a particular target parameter when running steadily, and not changing one or more particular elements. In some embodiments, such a determination indicates that the long-horizon optimized plan for np final products must be broken down further for implementation.

At operation 1504, the apparatus 200 includes means such as the long-horizon optimization circuitry 210, short-horizon optimization circuitry 212, control circuitry 214, lift circuitry 216, communications circuitry 208, input/output circuitry 206, processor 202, and/or the like, or a combination thereof, that sets at least one first ideal resting value for at least one product run rate of at least one blender. In some embodiments, the ideal resting value for the at least one product run rate of the at least one blender is set based at least in part on at least one demand rate of the long-horizon optimized plan. In this regard, the at least one demand rate in some embodiments is identified from the long-horizon optimized plan and a scheduler or other user associated with the processing plant should minimize the difference between the blender outlet run-rates and the demand run-rates for a particular timestamp interval (e.g., m-days) as represented.

At operation 1506, the apparatus 200 includes means such as the long-horizon optimization circuitry 210, short-horizon optimization circuitry 212, control circuitry 214, lift circuitry 216, communications circuitry 208, input/output circuitry 206, processor 202, and/or the like, or a combination thereof, that sets at least one second ideal resting value for at least one process unit. In some embodiments, the at least one second ideal resting value for the at least one process unit is set based at least in part on at least one unit target represented in the long-horizon optimized plan.

At operation 1508, the apparatus 200 includes means such as the long-horizon optimization circuitry 210, short-horizon optimization circuitry 212, control circuitry 214, lift circuitry 216, communications circuitry 208, input/output circuitry 206, processor 202, and/or the like, or a combination thereof, that sets at least one third ideal resting value for the at least one blender recipe. In some embodiments, the at least one ideal resting value for the at least one blender recipe is set based at least in part on at least one aggregate blend recipe represented in the long-horizon optimized plan.

In some embodiments, the apparatus 200 utilizes the long-horizon optimized plan to set the m-day ideal resting values for processing units of the processing plant. Additionally or alternatively, in some embodiments, the apparatus 200 utilizes the long-horizon optimized plan to set the m-day ideal resting values for blender recipes by one or more blenders of the processing plant. Additionally or alternatively, in some embodiments, the apparatus 200 sets the product run-rates in a manner that satisfies one or more conditions. For example, in some embodiments, the apparatus 200 sets product run-rates such that (1) the sum of the run rates is equal to the sum of the demand rates, (2) the run-rates minimize the difference from the m-day demand rates represented in the long-horizon optimized plan, and (3) the scheduled product runs are synchronized with the lift schedule.

In some embodiments, a lift schedule is iteratively schedulable. In this regard, in some embodiments, the lift schedule is generated such that it is synchronized with the product runs, and such that the availability of inventories in the product tanks and the scheduled product runs meet the demand as scheduled.

FIG. 16 illustrates a flowchart including operations of an example process for generating optimized operational parameter(s) using a fourth short-horizon optimization process. Specifically, FIG. 16 depicts operations of an example process 1600. In some embodiments, the process 1600 represents a different short-horizon optimization process initiated as part of a dual-horizon optimization process, for example when plant configuration result data indicates a number of blenders is not greater than or equal to a number of concurrent products, indicates that the processing plant is agile, and that the processing plant is configured where changing product or changing run-rate does not impact optimization of a target parameter. For example, in some embodiments the apparatus 200 performs the process 1600 as part of an example process for generating optimized operational parameter(s) using a dual-horizon optimization process in accordance with at least an example embodiment of the present disclosure. In some embodiments, the process 1600 is embodied by computer program code stored on a non-transitory computer-readable storage medium of a computer program product configured for execution to perform the process as depicted and described. Alternatively or additionally, in some embodiments, the process 1600 is performed by one or more specially configured computing devices, such as the apparatus 200 alone or in communication with one or more other component(s), device(s), system(s), and/or the like. In this regard, in some such embodiments, the apparatus 200 is specially configured by computer-coded instructions (e.g., computer program instructions) stored thereon, for example in the memory 204 and/or another component depicted and/or described herein and/or otherwise accessible to the apparatus 200, for performing the operations as depicted and described. In some embodiments, the apparatus 200 is in communication with one or more external apparatus(es), system(s), device(s), and/or the like, to perform one or more of the operations as depicted and described. For example, the apparatus 200 in some embodiments is in communication with at least one apparatus, at least one sensor associated with the at least one apparatus, at least one end-user computing device, and/or in some embodiments an optional external control system. For purposes of simplifying the description, the process 1600 is described as performed by and from the perspective of the apparatus 200.

The process 1600 begins at operation 1602. In some embodiments, the process 1600 begins after one or more operations depicted and/or described with respect to any one of the other processes described herein. For example, in some embodiments as depicted, the process 1600 begins after execution of operation 1002. In this regard, some or all of the process 1600 may replace or supplement one or more blocks depicted and/or described with respect to any of the processes described herein. Upon completion of the process 1600, the flow of operations may terminate. Additionally or alternatively, as depicted, upon completion of the process 1600 in some embodiments, flow may return to one or more operation(s) of another process, such as the operation 1000. It will be appreciated that, in some embodiments, the process 1600 embodies a sub-process of one or more other process(es) depicted and/or described herein, for example the process 1000.

At operation 1602, the apparatus 200 includes means such as the long-horizon optimization circuitry 210, short-horizon optimization circuitry 212, control circuitry 214, lift circuitry 216, communications circuitry 208, input/output circuitry 206, processor 202, and/or the like, or a combination thereof, that determines that plant configuration result data indicates a number of blenders is not greater than or equal to a number of concurrent products, and indicates that the processing plant is agile, and that the processing plant is configured where changing product or changing run-rate does not impact optimization of a target parameter. In some embodiments, the apparatus 200 utilizes a data identifier assigned to the processing plant to perform such determinations, for example by determining the data identifier is a certain value where different values of the data identifier represent different possible combinations of plant configuration result data.

In some embodiments, the apparatus 200 determines the number of concurrent products from a long-horizon optimized plan, for example generated via a long-horizon optimization process. Additionally or alternatively, in some embodiments, the apparatus 200 determines the plant configuration result indicating the number of blenders based at least in part on configuration data and/or external representation data indicating a physical layout of the processing plant itself. In some embodiments the apparatus 200 determines that the number of blenders is not greater than or equal to the number of concurrent products represented in the long-horizon optimized plan, for example corresponding to the number of final products in the long-horizon optimized plan.

In some embodiments, the apparatus 200 receives, retrieves, or otherwise identifies a data identifier that indicates whether a particular processing plant is agile. For example, in some embodiments, the apparatus 200 maintains a datastore including data identifier(s) indicating whether a particular plant is agile or not agile, and retrieves such a data identifier for use at 1502. In some embodiments, the data identifier is generated by a designer, administrator, or other user who has knowledge of the processing plant, observes the processing plant, and/or the like so as to determine whether the plant is agile. A processing plant being agile in some embodiments indicates that the processing plant is not affected much, or at all, by changes in one or more particular changes in operating point. In this regard, a processing plant that is agile and its response to product and/or run-rate change, and changing products or their run rates does not impact the target parameter, then such a determination indicates that long-horizon optimization can be ignored, as switching between configurations and/or operational modes of the processing plant or elements thereof does not impact the target parameter(s).

At operation 1604, the apparatus 200 includes means such as the long-horizon optimization circuitry 210, short-horizon optimization circuitry 212, control circuitry 214, lift circuitry 216, communications circuitry 208, input/output circuitry 206, processor 202, and/or the like, or a combination thereof, that identifies a short-horizon optimized plan using a short-horizon optimization process that does not utilize the long-horizon optimized plan. In some embodiments, the short-horizon optimization process is any other process, algorithm, model, or the like that optimizes a target parameter in real-time. For example, this short-horizon optimization process may generate a short-horizon optimized plan that optimizes for real-time conditions, such that the target parameter(s) is/are optimized based at least in part on what is best in real-time. Changes to what is best nevertheless may be handled by the corresponding processing plant, as it has been determined at operation 1602 that such changes in operation and/or configuration do not affect the optimization of the target parameter(s).

At operation 1606, the apparatus 200 includes means such as the long-horizon optimization circuitry 210, short-horizon optimization circuitry 212, control circuitry 214, lift circuitry 216, communications circuitry 208, input/output circuitry 206, processor 202, and/or the like, or a combination thereof, that determines the at least one optimized operational parameter from the short-horizon optimized plan. For example, in some embodiments, the optimized operational parameter indicates target amount(s) for one or more final product(s) that optimize target parameter(s) for a current timestamp, for example in real-time.

In some embodiments, the apparatus 200 utilizes the long-horizon optimized plan to set the m-day ideal resting values for processing units of the processing plant. Additionally or alternatively, in some embodiments, the apparatus 200 utilizes the long-horizon optimized plan to set the m-day ideal resting values for blender recipes by one or more blenders of the processing plant. Additionally or alternatively, in some embodiments, the apparatus 200 sets the product run-rates in a manner that satisfies one or more conditions. For example, in some embodiments, the apparatus 200 sets product run-rates such that (1) the sum of the run rates is equal to the sum of the demand rates, (2) the run-rates minimize the difference from the m-day demand rates represented in the long-horizon optimized plan, and (3) the scheduled product runs are synchronized with the lift schedule.

In some embodiments, a lift schedule is iteratively schedulable. In this regard, in some embodiments, the lift schedule is generated such that it is synchronized with the product runs, and such that the availability of inventories in the product tanks and the scheduled product runs meet the demand as scheduled.

FIG. 17 illustrates a flowchart including operations of an example process for generating optimized operational parameter(s) using a fifth short-horizon optimization process. Specifically, FIG. 17 depicts operations of an example process 1700. In some embodiments, the process 1700 represents a different short-horizon optimization process initiated as part of a dual-horizon optimization process, for example when plant configuration result data indicates a number of blenders is not greater than or equal to a number of concurrent products, indicates that the processing plant is agile, and indicates that the processing plant is configured where changing product or changing run-rate does impact optimization of a target parameter. For example, in some embodiments the apparatus 200 performs the process 1700 as part of an example process for generating optimized operational parameter(s) using a dual-horizon optimization process in accordance with at least an example embodiment of the present disclosure. In some embodiments, the process 1700 is embodied by computer program code stored on a non-transitory computer-readable storage medium of a computer program product configured for execution to perform the process as depicted and described. Alternatively or additionally, in some embodiments, the process 1700 is performed by one or more specially configured computing devices, such as the apparatus 200 alone or in communication with one or more other component(s), device(s), system(s), and/or the like. In this regard, in some such embodiments, the apparatus 200 is specially configured by computer-coded instructions (e.g., computer program instructions) stored thereon, for example in the memory 204 and/or another component depicted and/or described herein and/or otherwise accessible to the apparatus 200, for performing the operations as depicted and described. In some embodiments, the apparatus 200 is in communication with one or more external apparatus(es), system(s), device(s), and/or the like, to perform one or more of the operations as depicted and described. For example, the apparatus 200 in some embodiments is in communication with at least one apparatus, at least one sensor associated with the at least one apparatus, at least one end-user computing device, and/or in some embodiments an optional external control system. For purposes of simplifying the description, the process 1700 is described as performed by and from the perspective of the apparatus 200.

The process 1700 begins at operation 1702. In some embodiments, the process 1700 begins after one or more operations depicted and/or described with respect to any one of the other processes described herein. For example, in some embodiments as depicted, the process 1600 begins after execution of operation 1002. In this regard, some or all of the process 1700 may replace or supplement one or more blocks depicted and/or described with respect to any of the processes described herein. Upon completion of the process 1700, the flow of operations may terminate. Additionally or alternatively, as depicted, upon completion of the process 1700 in some embodiments, flow may return to one or more operation(s) of another process, such as the operation 1000. It will be appreciated that, in some embodiments, the process 1700 embodies a sub-process of one or more other process(es) depicted and/or described herein, for example the process 1000.

At operation 1702, the apparatus 200 includes means such as the long-horizon optimization circuitry 210, short-horizon optimization circuitry 212, control circuitry 214, lift circuitry 216, communications circuitry 208, input/output circuitry 206, processor 202, and/or the like, or a combination thereof, that determines that plant configuration result data indicates a number of blenders is not greater than or equal to a number of concurrent products, and indicates that the processing plant is agile, and that the processing plant is configured where changing product or changing run-rate does impact optimization of a target parameter. In some embodiments, the apparatus 200 utilizes a data identifier assigned to the processing plant to perform such determinations, for example by determining the data identifier is a certain value where different values of the data identifier represent different possible combinations of plant configuration result data.

In some embodiments, the apparatus 200 determines the number of concurrent products from a long-horizon optimized plan, for example generated via a long-horizon optimization process. Additionally or alternatively, in some embodiments, the apparatus 200 determines the plant configuration result indicating the number of blenders based at least in part on configuration data and/or external representation data indicating a physical layout of the processing plant itself. In some embodiments the apparatus 200 determines that the number of blenders is not greater than or equal to the number of concurrent products represented in the long-horizon optimized plan, for example corresponding to the number of final products in the long-horizon optimized plan.

In some embodiments, the apparatus 200 receives, retrieves, or otherwise identifies a data identifier that indicates whether a particular processing plant is agile. For example, in some embodiments, the apparatus 200 maintains a datastore including data identifier(s) indicating whether a particular plant is agile or not agile, and retrieves such a data identifier for use at 1502. In some embodiments, the data identifier is generated by a designer, administrator, or other user who has knowledge of the processing plant, observes the processing plant, and/or the like so as to determine whether the plant is agile. A processing plant being agile in some embodiments indicates that the processing plant is not affected much, or at all, by changes in one or more particular changes in operating point. In this regard, a processing plant that is agile in its response to changes in product and/or run-rates, but that is configured such that changing products or their run rates does impact the target parameter, still requires use of a long-horizon optimization in conjunction with a short-horizon optimization.

At operation 1704, the apparatus 200 includes means such as the long-horizon optimization circuitry 210, short-horizon optimization circuitry 212, control circuitry 214, lift circuitry 216, communications circuitry 208, input/output circuitry 206, processor 202, and/or the like, or a combination thereof, that generates a short-horizon optimized plan including at least one anchoring point. In some embodiments, the short-horizon optimized plan includes the at least one anchoring point based at least in part on the long-horizon optimized plan. In this regard, the optimal solution for np products as represented by the long-horizon optimized plan provides anchoring point(s) for the short-term optimization represented by the short-horizon optimized plan. In some embodiments, the short-horizon optimized plan is generated utilizing a short-horizon optimization process as described with respect to the process 1300 herein, with the anchoring points set for one or more of the ideal resting values described therein.

At operation 1706, the apparatus 200 includes means such as the long-horizon optimization circuitry 210, short-horizon optimization circuitry 212, control circuitry 214, lift circuitry 216, communications circuitry 208, input/output circuitry 206, processor 202, and/or the like, or a combination thereof, that includes at least one ideal resting value in the short-horizon optimized plan based at least in part on the long-horizon optimized plan. In this regard, the optimal solution again is utilized for the ideal resting values for the short-horizon optimized plan.

In some embodiments, the apparatus 200 utilizes the long-horizon optimized plan to set the m-day ideal resting values for processing units of the processing plant. Additionally or alternatively, in some embodiments, the apparatus 200 utilizes the long-horizon optimized plan to set the m-day ideal resting values for blender recipes by one or more blenders of the processing plant. Additionally or alternatively, in some embodiments, the apparatus 200 sets the product run-rates in a manner that satisfies one or more conditions. For example, in some embodiments, the apparatus 200 sets product run-rates such that (1) the sum of the run rates is equal to the sum of the demand rates, (2) the run-rates minimize the difference from the m-day demand rates represented in the long-horizon optimized plan, and (3) the scheduled product runs are synchronized with the lift schedule.

In some embodiments, a lift schedule is iteratively schedulable. In this regard, in some embodiments, the lift schedule is generated such that it is synchronized with the product runs, and such that the availability of inventories in the product tanks and the scheduled product runs meet the demand as scheduled.

### HYBRID IMPLEMENTATIONS OF THE DISCLOSURE

In some embodiments, a processing plant does not include a single type of blender. Rather, in some embodiments, a processing plant-for example an oil refinery-includes multiple blender type. In one example context, an oil refinery includes at least one batch blender and at least one rundown blender. The oil refinery may include different pools as well, for example separating distillates from gasoline in different pools.

In some such embodiments, plantwide optimization through one or more optimization processes is performed at a particular pool-level. For example, some embodiments partition an m-day optimization solution (e.g., embodied by a long-horizon optimized plan generated via a long-horizon optimization process for example) into different pools utilized by the oil refinery. The pools may be segmented into batch-blending pools and rundown blending pools. In some embodiments, the rundown blending pools may each be optimized utilizing the dual-horizon optimization process(es) described herein, independently from the batch-blending pools. For example, in some embodiments, the batch-blending pool in some embodiments are processed utilizing dual-representation optimization process(es), and/or otherwise as described herein, or utilizing existing optimization process(es). In this regard, it will be appreciated that such pools may be optimized utilizing different optimization processes (e.g., dual-horizon optimization processes for rundown blending and another optimizing process for batch-blending optimization).

### Conclusion

Although an example processing system has been described above, implementations of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more modules of computer program instructions, encoded on computer storage medium for execution by, or to control the operation of, information/data processing apparatus. Alternatively, or in addition, the program instructions can be encoded on an artificially-generated propagated signal, e.g., a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a repository management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or information/data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, e.g., magnetic, magneto-optical disks, or optical disks. However, a computer need not have such devices. Devices suitable for storing computer program instructions and information/data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, e.g., a CRT (cathode ray tube) or LCD (liquid crystal display) monitor, for displaying information/data to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, e.g., as an information/data server, or that includes a middleware component, e.g., an application server, or that includes a front-end component, e.g., a client computer having a graphical user interface or a web browser through which a user can interact with an implementation of the subject matter described herein, or any combination of one or more such back-end, middleware, or front-end components. The components of the system can be interconnected by any form or medium of digital information/data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (e.g., an HTML page) to a client device (e.g., for purposes of displaying information/data to and receiving user input from a user interacting with the client device). Information/data generated at the client device (e.g., a result of the user interaction) can be received from the client device at the server.

While this specification contains many specific implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. In addition, the processes depicted in the accompanying figures do not necessarily require the particular order shown, or sequential order, to achieve desirable results. In certain implementations, multitasking and parallel processing may be advantageous.

## Claims

1. A computer-implemented method for generating at least one optimized operational parameter associated with a processing plant utilizing a dual-horizon optimization process comprising:
identifying (1002) a long-horizon optimized plan;
determining (1004) plant configuration result data including at least one data identifier indicating different configurations of the processing plant, wherein the plant configuration result data further indicates whether a number of blenders associated with the processing plant is greater than or equal to a number of concurrent products; and
generating (1006) the at least one optimized operational parameter using a short-horizon optimization process, wherein the optimized operational parameter is generated based on the long-horizon optimized plan and the plant configuration result data, wherein the at least one optimized operational parameter represents a parameter value that is utilized to control at least one physical component of the processing plant.

2. The computer-implemented method according to claim 1, wherein the plant configuration result data indicates that the number of blenders is greater than or equal to the number of concurrent products, wherein generating the at least one optimized operational parameter comprises:
applying (1304) at least one value of the long-horizon optimized plan as the at least one optimized operational parameter to control the at least one physical component of the processing plant; or
applying (1306) the at least one value of the long-horizon optimized plan as the at least one optimized operational parameter to set at least one ideal resting value.

3. The computer-implemented method according to claim 2, further comprising:
Setting (1308) at least one blender outlet target flowrate to an average product run rate determined from the long-horizon optimized plan.

4. The computer-implemented method according to claim 1, wherein the plant configuration result data indicates that the number of blenders is determined not greater than the number of concurrent products and wherein the plant configuration result data indicates that the number of blenders is equivalent to a number of primary products, wherein generating the optimal operational parameters comprises:
for each secondary product of at least one secondary product, assigning (1404) a closest primary product associated with the secondary product; and
identifying a short-horizon optimized plan that represents a change from the closest primary product to the secondary product as a specification disturbance.

5. The computer-implemented method according to claim 1, wherein the plant configuration result data indicates that the number of blenders is determined not greater than or equal to the number of concurrent products, and wherein the plant configuration results indicates that the number of blenders is less than a number of primary products, and wherein the plant configuration results indicates that the processing plant is not agile, and wherein generating the at least one optimal operational parameter comprises:
setting (1504) at least one first ideal resting value for at least one product run rate of at least one blender based at least in part on at least one demand rate of the long-horizon optimized plan;
setting (1506) at least one second ideal resting value for at least one process unit based at least in part on at least one unit target represented in the long-horizon optimized plan; and
setting (1508) at least one third ideal resting value for at least one blender recipe based at least in part on at least one aggregate blend recipe represented in the long-horizon optimized plan.

6. The computer-implemented method according to claim 1, wherein the plant configuration result data indicates that the number of blenders is determined not greater than the number of concurrent products, wherein the plant configuration results indicates that the number of blenders is less than a number of primary products, wherein the plant configuration results indicates that the processing plant is agile and that the processing plant is configured where changing product or changing run-rate does not impact optimization of a target parameter, and wherein generating the at least one optimized operational parameter comprises:
Identifying (1604) a short-horizon optimized plan using the short-horizon optimization process that does not utilize the long-horizon optimized plan; and
determining (1606) the at least one optimized operational parameter from the short-horizon optimized plan.

7. The computer-implemented method according to claim 1, wherein the plant configuration result data indicates that the number of blenders is determined not greater than the number of concurrent products, wherein the plant configuration result data indicates that the number of blenders is less than a number of primary products, wherein the plant configuration result data indicates that the processing plant is agile and that the processing plant is configured where changing product or changing run-rate does impact optimization of a target parameter, and wherein to generate the at least one optimized operational parameter comprises:
generating (1702) a short-horizon optimized plan including at least one anchoring point based at least in part on the long-horizon optimized plan; and
including (1704) at least one ideal resting value in the short-horizon optimized plan based at least in part on the long-horizon optimized plan.

8. The computer-implemented method according to claim 1, further comprising:
generating (1102) improvement data associated with an estimated long-horizon optimized plan representing operation of the processing plant with addition of at least one new blender.

9. The computer-implemented method according to claim 8, further comprising:
determining (1104) that the improvement data satisfies an improvement threshold; and generate (1106) an indication that the improvement data satisfies the improvement threshold.

10. The computer-implemented method according to claim 1, wherein the processing plant includes at least one rundown blender and at least one batch blender, wherein generating the at least one optimized operational parameter utilized to control the at least one rundown blender, comprises:
generating, (1008) using a different optimization process, at least one second optimized operational parameter utilized to control the at least one batch blender.

11. The computer-implemented method according to claim 1, further comprising:
wherein the at least one data identifier indicates whether the processing plant:
(1) indicates that the number of blenders is greater than or equal to the number of concurrent products,
(2) indicates that the number of blenders is determined not greater than the number of concurrent products and indicates that the number of blenders is equivalent to a number of primary products,
(3) indicates that the number of blenders is determined not greater than or equal to the number of concurrent products, indicates that the number of blenders is less than a number of primary products, and indicates that the refinery plant is not agile,
(4) indicates that the number of blenders is determined not greater than the number of concurrent products, indicates that the number of blenders is less than a number of primary products, indicates that the processing plant is agile, and indicates that the processing plant is configured where changing product or changing run-rate does not impact optimization of a target parameter, or
(5) indicates that the number of blenders is determined not greater than the number of concurrent products, indicates that the number of blenders is less than a number of primary products, indicates that the processing plant is agile, and indicates that the processing plant is configured where changing product or changing run-rate does impact optimization of a target parameter,
generating the at least one optimized operational parameter based at least in part on the short-horizon optimization process corresponding to the data identifier.

12. The computer-implemented method according to claim 1, further comprising:
identifying a data identifier from a set of candidate data identifiers, wherein the data identifier represents at least one plant characteristic associated with the processing plant, wherein the plant characteristic at least indicates whether the processing plant includes the number of blenders that is greater than or equal to the number of concurrent products,
generating the at least one optimized operational parameter utilizing the short-horizon optimization process corresponding to the data identifier.

13. The computer-implemented method according to claim 1, further comprising:
causing configuration of a lift schedule based at least in part on the at least one optimized operational parameter.

14. An apparatus for generating at least one optimized operational parameter comprising at least one processor and at least one memory having at least one application that, upon execution by the at least one processor, configures the apparatus to perform the computer-implemented method of any one of claims 1-13.

15. A computer program product comprising at least one non-transitory computer-readable storage medium the at least one non-transitory computer-readable storage medium having computer program code stored thereon that, in execution with at least one processor, is configured for performing the computer-implemented method of any one of claims 1-13.

## Patentansprüche

1. Computerimplementiertes Verfahren zum Erzeugen von mindestens einem einer Verarbeitungsanlage zugehörigen optimierten Betriebsparameter unter Nutzung eines Doppelhorizont-Optimierungsprozesses, umfassend:
Identifizieren (1002) eines optimierten Langhorizont-Plans;
Bestimmen (1004) von Anlagenkonfigurationsergebnisdaten, die mindestens eine Datenkennung einschließen, die unterschiedliche Konfigurationen der Verarbeitungsanlage angibt, wobei die Anlagenkonfigurationsergebnisdaten ferner angeben, ob eine Anzahl von der Verarbeitungsanlage zugehörigen Mischern größer als oder gleich einer Anzahl von gleichlaufenden Produkten ist; und
Erzeugen (1006) des mindestens einen optimierten Betriebsparameters unter Verwendung eines Kurzhorizont-Optimierungsprozesses, wobei der optimierte Betriebsparameter auf Basis des optimierten Langhorizont-Plans und der Anlagenkonfigurationsergebnisdaten erzeugt wird, wobei der mindestens eine optimierte Betriebsparameter einen Parameterwert darstellt, der genutzt wird, um mindestens eine physische Komponente der Verarbeitungsanlage zu steuern.

2. Computerimplementiertes Verfahren nach Anspruch 1, wobei die Anlagenkonfigurationsergebnisdaten angeben, dass die Anzahl von Mischern größer als oder gleich der Anzahl von gleichlaufenden Produkten ist, wobei das Erzeugen des mindestens einen optimierten Betriebsparameters Folgendes umfasst:
Anwenden (1304) mindestens eines Wertes des optimierten Langhorizont-Plans als den mindestens einen optimierten Betriebsparameter, um die mindestens eine physische Komponente der Verarbeitungsanlage zu steuern; oder
Anwenden (1306) mindestens eines Wertes des optimierten Langhorizont-Plans als den mindestens einen optimierten Betriebsparameter, um mindestens einen idealen Ruhewert einzustellen.

3. Computerimplementiertes Verfahren nach Anspruch 2, ferner umfassend:
Einstellen (1308) von mindestens einer Mischerausgangszielflussrate auf eine durchschnittliche Produktumsatzrate, die aus dem optimierten Langhorizont-Plan bestimmt wird.

4. Computerimplementiertes Verfahren nach Anspruch 1, wobei die Anlagenkonfigurationsergebnisdaten angeben, dass die Anzahl von Mischern als nicht größer als die Anzahl von gleichlaufenden Produkten bestimmt wird, und wobei die Anlagenkonfigurationsergebnisdaten angeben, dass die Anzahl von Mischern gleichwertig zu einer Anzahl von Primärprodukten ist, wobei das Erzeugen der optimalen Betriebsparameter Folgendes umfasst:
Zuweisen (1404), für jedes Sekundärprodukt von mindestens einem Sekundärprodukt, eines nächstgelegenen Primärprodukts, das dem Sekundärprodukt zugehörig ist; und
Identifizieren eines optimierten Kurzhorizont-Plans, der eine Änderung von dem nächstgelegenen Primärprodukt zu dem Sekundärprodukt als eine Spezifikationsstörung darstellt.

5. Computerimplementiertes Verfahren nach Anspruch 1, wobei die Anlagenkonfigurationsergebnisdaten angeben, dass die Anzahl von Mischern als nicht größer als oder gleich der Anzahl von gleichlaufenden Produkten bestimmt wird, und wobei die Anlagenkonfigurationsergebnisse angeben, dass die Anzahl von Mischern kleiner als eine Anzahl von Primärprodukten ist, und wobei die Anlagenkonfigurationsergebnisse angeben, dass die Verarbeitungsanlage nicht flexibel ist, und wobei das Erzeugen des mindestens einen optimalen Betriebsparameters Folgendes umfasst:
Einstellen (1504) von mindestens einem ersten idealen Ruhewert für mindestens eine Produktumsatzrate mindestens eines Mischers mindestens teilweise auf Basis mindestens einer Bedarfsrate des optimierten Langhorizont-Plans;
Einstellen (1506) von mindestens einem zweiten idealen Ruhewert für mindestens eine Prozesseinheit mindestens teilweise auf Basis mindestens eines Einheit-Ziels, das in dem optimierten Langhorizont-Plan dargestellt ist; und
Einstellen (1508) von mindestens einem dritten idealen Ruhewert für mindestens ein Mischerrezept mindestens teilweise auf Basis mindestens eines aggregierten Mischrezepts, das in dem optimierten Langhorizont-Plan dargestellt ist.

6. Computerimplementiertes Verfahren nach Anspruch 1, wobei die Anlagenkonfigurationsergebnisdaten angeben, dass die Anzahl von Mischern als nicht größer als die Anzahl von gleichlaufenden Produkten bestimmt wird, wobei die Anlagenkonfigurationsergebnisse angeben, dass die Anzahl von Mischern kleiner als eine Anzahl von Primärprodukten ist, wobei die Anlagenkonfigurationsergebnisse angeben, dass die Verarbeitungsanlage flexibel ist und dass die Verarbeitungsanlage dafür konfiguriert ist, wenn ein sich änderndes Produkt oder eine sich ändernde Umsatzrate eine Optimierung eines Zielparameters nicht beeinflusst, und wobei das Erzeugen des mindestens einen optimierten Betriebsparameters Folgendes umfasst:
Identifizieren (1604) eines optimierten Kurzhorizont-Plans unter Verwendung des Kurzhorizont-Optimierungsprozesses, der den optimierten Langhorizont-Plan nicht nutzt; und
Bestimmen (1606) des mindestens einen optimierten Betriebsparameters aus dem optimierten Kurzhorizont-Plan.

7. Computerimplementiertes Verfahren nach Anspruch 1, wobei die Anlagenkonfigurationsergebnisdaten angeben, dass die Anzahl von Mischern als nicht größer als die Anzahl von gleichlaufenden Produkten bestimmt wird, wobei die Anlagenkonfigurationsergebnisdaten angeben, dass die Anzahl von Mischern kleiner als eine Anzahl von Primärprodukten ist, wobei die Anlagenkonfigurationsergebnisdaten angeben, dass die Verarbeitungsanlage flexibel ist und dass die Verarbeitungsanlage dafür konfiguriert ist, wenn ein sich änderndes Produkt oder eine sich ändernde Umsatzrate eine Optimierung eines Zielparameters beeinflusst, und wobei das Erzeugen des mindestens einen optimierten Betriebsparameters Folgendes umfasst:
Erzeugen (1702) eines optimierten Kurzhorizont-Plans, der mindestens einen Ankerpunkt mindestens teilweise auf Basis des optimierten Langhorizont-Plans einschließt; und
Einschließen (1704) von mindestens einem idealen Ruhewert in den optimierten Kurzhorizont-Plan mindestens teilweise auf Basis des optimierten Langhorizont-Plans.

8. Computerimplementiertes Verfahren nach Anspruch 1, ferner umfassend:
Erzeugen (1102) von einem geschätzten optimierten Langhorizont-Plan zugehörigen Verbesserungsdaten, die einen Betrieb der Verarbeitungsanlage mit einer Hinzufügung von mindestens einem neuen Mischer darstellen.

9. Computerimplementiertes Verfahren nach Anspruch 8, ferner umfassend:
Bestimmen (1104), dass die Verbesserungsdaten einen Verbesserungsschwellenwert erfüllen; und
Erzeugen (1106) einer Angabe, dass die Verbesserungsdaten den Verbesserungsschwellenwert erfüllen.

10. Computerimplementiertes Verfahren nach Anspruch 1, wobei die Verarbeitungsanlage mindestens einen nachlaufenden Mischer und mindestens einen Chargenmischer einschließt, wobei das Erzeugen des mindestens einen optimierten Betriebsparameters, der dazu genutzt wird, den mindestens einen nachlaufenden Mischer zu steuern, Folgendes umfasst:
Erzeugen (1008), unter Verwendung eines unterschiedlichen Optimierungsprozesses, von mindestens einem zweiten optimierten Betriebsparameter, der dazu genutzt wird, den mindestens einen Chargenmischer zu steuern.

11. Computerimplementiertes Verfahren nach Anspruch 1, ferner umfassend:
wobei die mindestens eine Datenkennung angibt, ob die Verarbeitungsanlage:
(1) angibt, dass die Anzahl von Mischern größer als oder gleich der Anzahl von gleichlaufenden Produkten ist,
(2) angibt, dass die Anzahl von Mischern als nicht größer als die Anzahl von gleichlaufenden Produkten bestimmt wird, und angibt, dass die Anzahl von Mischern gleichwertig zu einer Anzahl von Primärprodukten ist,
(3) angibt, dass die Anzahl von Mischern als nicht größer als oder gleich der Anzahl von gleichlaufenden Produkten bestimmt wird, angibt, dass die Anzahl von Mischern geringer ist als eine Anzahl von Primärprodukten und angibt, dass die Raffinerieanlage nicht flexibel ist,
(4) angibt, dass die Anzahl von Mischern als nicht größer als die Anzahl von gleichlaufenden Produkten bestimmt wird, angibt, dass die Anzahl von Mischern kleiner ist als eine Anzahl von Primärprodukten, angibt, dass die Verarbeitungsanlage flexibel ist, und angibt, dass die Verarbeitungsanlage dafür konfiguriert ist, wenn ein sich änderndes Produkt oder eine sich ändernde Umsatzrate eine Optimierung eines Zielparameters nicht beeinflusst, oder
(5) angibt, dass die Anzahl von Mischern als nicht größer als die Anzahl von gleichlaufenden Produkten bestimmt wird, angibt, dass die Anzahl von Mischern kleiner ist als eine Anzahl von Primärprodukten, angibt, dass die Verarbeitungsanlage flexibel ist, und angibt, dass die Verarbeitungsanlage dafür konfiguriert ist, wenn ein sich änderndes Produkt oder eine sich ändernde Umsatzrate eine Optimierung eines Zielparameters beeinflusst,
wobei das Erzeugen des mindestens einen optimierten Betriebsparameters mindestens teilweise auf Basis des Kurzhorizont-Optimierungsprozesses der Datenkennung entspricht.

12. Computerimplementiertes Verfahren nach Anspruch 1, ferner umfassend:
Identifizieren einer Datenkennung aus einem Satz von infrage kommenden Datenkennungen, wobei die Datenkennung mindestens ein der Verarbeitungsanlage zugehöriges Anlagenmerkmal darstellt, wobei das Anlagenmerkmal mindestens angibt, ob die Verarbeitungsanlage die Anzahl von Mischern einschließt, die größer als oder gleich der Anzahl von gleichlaufenden Produkten ist,
wobei das Erzeugen des mindestens einen optimierten Betriebsparameters unter Nutzung des Kurzhorizont-Optimierungsprozesses der Datenkennung entspricht.

13. Computerimplementiertes Verfahren nach Anspruch 1, ferner umfassend:
Veranlassen einer Konfiguration eines Hebevorrichtungsprogramms mindestens teilweise auf Basis des mindestens einen optimierten Betriebsparameters.

14. Einrichtung zum Erzeugen von mindestens einem optimierten Betriebsparameter, umfassend mindestens einen Prozessor und mindestens einen Speicher, der mindestens eine Anwendung aufweist, die bei Ausführung durch den mindestens einen Prozessor die Einrichtung dazu konfiguriert, das computerimplementierte Verfahren nach einem der Ansprüche 1 bis 13 durchzuführen.

15. Computerprogrammprodukt, umfassend mindestens einen nicht transitorischen computerlesbaren Speicher, wobei das mindestens eine nicht transitorische computerlesbare Speichermedium einen darauf gespeicherten Computerprogrammcode aufweist, der bei Ausführung mit dem mindestens einen Prozessor zum Durchführen des computerimplementierten Verfahrens nach einem der Ansprüche 1 bis 13 konfiguriert ist.

## Revendications

1. Procédé mis en œuvre par ordinateur pour générer au moins un paramètre opérationnel optimisé associé à une usine de traitement utilisant un processus d'optimisation à double terme comprenant :
l'identification (1002) d'un plan optimisé à long terme ;
la détermination (1004) des données de résultat de configuration de l'usine incluant au moins un identifiant de données indiquant différentes configurations de l'usine de traitement, dans lequel les données de résultat de configuration de l'usine indiquent en outre si un nombre de mélangeurs associés à l'usine de traitement est supérieur ou égal à un nombre de produits simultanés ; et
la génération (1006) de l'au moins un paramètre opérationnel optimisé à l'aide d'un processus d'optimisation à court terme, dans lequel le paramètre opérationnel optimisé est généré sur la base du plan optimisé à long terme et des données de résultat de configuration de l'usine,
dans lequel l'au moins un paramètre opérationnel optimisé représente une valeur de paramètre qui est utilisée pour contrôler au moins un composant physique de l'usine de traitement.

2. Procédé mis en œuvre par ordinateur selon la revendication 1, dans lequel les données de résultat de configuration de l'usine indiquent que le nombre de mélangeurs est supérieur ou égal au nombre de produits simultanés, dans lequel la génération de l'au moins un paramètre opérationnel optimisé comprend :
l'application (1304) d'au moins une valeur du plan optimisé à long terme sous forme de l'au moins un paramètre opérationnel optimisé pour contrôler l'au moins un composant physique de l'usine de traitement ; ou
l'application (1306) de l'au moins une valeur du plan optimisé à long terme sous forme de l'au moins un paramètre opérationnel optimisé pour définir au moins une valeur de repos idéale.

3. Procédé mis en œuvre par ordinateur selon la revendication 2, comprenant en outre :
la définition (1308) d'au moins un débit cible de sortie du mélangeur sur un débit moyen de production déterminé à partir du plan optimisé à long terme.

4. Procédé mis en œuvre par ordinateur selon la revendication 1, dans lequel les données de résultat de configuration de l'usine indiquent que le nombre de mélangeurs est déterminé comme n'étant pas supérieur au nombre de produits simultanés et dans lequel les données de résultat de configuration de l'usine indiquent que le nombre de mélangeurs est équivalent à un nombre de produits primaires, dans lequel la génération des paramètres opérationnels optimaux comprend :
pour chaque produit secondaire d'au moins un produit secondaire, l'attribution (1404) d'un produit primaire le plus proche associé au produit secondaire ; et
l'identification d'un plan optimisé à court terme qui représente un changement du produit primaire le plus proche au produit secondaire comme une perturbation de spécification.

5. Procédé mis en œuvre par ordinateur selon la revendication 1, dans lequel les données de résultat de configuration de l'usine indiquent que le nombre de mélangeurs est déterminé comme n'étant pas supérieur ou égal au nombre de produits simultanés, et dans lequel les données des résultats de configuration de l'usine indiquent que le nombre de mélangeurs est inférieur à un nombre de produits primaires, et dans lequel les données des résultats de configuration de l'usine indiquent que l'usine de traitement n'est pas agile, et dans lequel la génération de l'au moins un paramètre opérationnel optimal comprend :
la définition (1504) d'au moins une première valeur de repos idéale pour au moins un débit de production d'au moins un mélangeur basé au moins en partie sur au moins un taux de demande du plan optimisé à long terme ;
la définition (1506) d'au moins une deuxième valeur de repos idéale pour au moins une unité de processus basée au moins en partie sur au moins une cible unitaire représentée dans le plan optimisé à long terme ; et
la définition (1508) d'au moins une troisième valeur de repos idéale pour au moins une recette de mélangeur basée au moins en partie sur au moins une recette de mélange global représentée dans le plan optimisé à long terme.

6. Procédé mis en œuvre par ordinateur selon la revendication 1, dans lequel les données de résultat de configuration de l'usine indiquent que le nombre de mélangeurs est déterminé comme n'étant pas supérieur au nombre de produits simultanés, dans lequel les résultats de configuration de l'usine indiquent que le nombre de mélangeurs est inférieur à un nombre de produits primaires, dans lequel les résultats de configuration de l'usine indiquent que l'usine de traitement est agile et que l'usine de traitement est configurée de manière à ce que le changement de produit ou le changement de débit de production n'ait pas d'impact sur l'optimisation d'un paramètre cible, et dans lequel la génération de l'au moins un paramètre opérationnel optimisé comprend :
l'identification (1604) d'un plan optimisé à court terme à l'aide du processus d'optimisation à court terme qui n'utilise pas le plan optimisé à long terme ; et
la détermination (1606) de l'au moins un paramètre opérationnel optimisé à partir du plan optimisé à court terme.

7. Procédé mis en œuvre par ordinateur selon la revendication 1, dans lequel les données de résultat de configuration de l'usine indiquent que le nombre de mélangeurs est déterminé comme n'étant pas supérieur au nombre de produits simultanés, dans lequel les données de résultats de configuration de l'usine indiquent que le nombre de mélangeurs est inférieur à un nombre de produits primaires, dans lequel les données de résultats de configuration de l'usine indiquent que l'usine de traitement est agile et que l'usine de traitement est configurée de manière à ce que le changement de produit ou le changement de débit de production n'a pas d'impact sur l'optimisation d'un paramètre cible, et dans lequel la génération de l'au moins un paramètre opérationnel optimisé comprend :
la génération (1702) d'un plan optimisé à court terme incluant au moins un point d'ancrage basé au moins en partie sur le plan optimisé à long terme ; et
l'inclusion (1704) d'au moins une valeur de repos idéale dans le plan optimisé à court terme basée au moins en partie sur le plan optimisé à long terme.

8. Procédé mis en œuvre par ordinateur selon la revendication 1, comprenant en outre :
la génération (1102) des données d'amélioration associées à un plan optimisé à long terme estimé représentant le fonctionnement de l'usine de traitement avec l'ajout d'au moins un nouveau mélangeur.

9. Procédé mis en œuvre par ordinateur selon la revendication 8, comprenant en outre :
la détermination (1104) que les données d'amélioration satisfont un seuil d'amélioration ; et
la génération (1106) d'une indication que les données d'amélioration satisfont le seuil d'amélioration.

10. Procédé mis en œuvre par ordinateur selon la revendication 1, dans lequel l'usine de traitement inclut au moins un mélangeur de réduction et au moins un mélangeur par lots, dans lequel la génération de l'au moins un paramètre opérationnel optimisé utilisé pour contrôler l'au moins un mélangeur de réduction comprend :
la génération (1008), à l'aide d'un processus d'optimisation différent, d'au moins un deuxième paramètre opérationnel optimisé utilisé pour contrôler l'au moins un mélangeur par lots.

11. Procédé mis en œuvre par ordinateur selon la revendication 1, comprenant en outre :
dans lequel l'au moins un identifiant de données indique si l'usine de traitement :
(1) indique que le nombre de mélangeurs est supérieur ou égal au nombre de produits simultanés,
(2) indique que le nombre de mélangeurs est déterminé comme n'étant pas supérieur que le nombre de produits simultanés et indique que le nombre de mélangeurs est équivalent à un nombre de produits primaires,
(3) indique que le nombre de mélangeurs est déterminé comme n'étant pas supérieur ou égal que le nombre de produits simultanés, indique que le nombre de mélangeurs est inférieur à un nombre de produits primaires, et indique que l'usine de raffinage n'est pas agile,
(4) indique que le nombre de mélangeurs est déterminé comme n'étant pas supérieur que le nombre de produits simultanés, indique que le nombre de mélangeurs est inférieur à un nombre de produits primaires, indique que l'usine de traitement est agile et indique que l'usine de traitement est configurée de manière à ce que le changement de produit ou le changement de débit de production n'ait pas d'impact sur l'optimisation d'un paramètre cible, ou
(5) indique que le nombre de mélangeurs est déterminé comme n'étant pas supérieur au nombre de produits simultanés, indique que le nombre de mélangeurs est inférieur à un nombre de produits primaires, indique que l'usine de traitement est agile et indique que l'usine de traitement est configurée de manière à ce que le changement de produit ou le changement de débit de production n'ait pas d'impact sur l'optimisation d'un paramètre cible,
dans lequel la génération de l'au moins un paramètre opérationnel optimisé basé au moins en partie sur le processus d'optimisation à court terme correspondant à l'identifiant de données.

12. Procédé mis en œuvre par ordinateur selon la revendication 1, comprenant en outre :
l'identification d'un identifiant de données à partir d'un ensemble d'identifiants de données candidats, dans lequel l'identifiant de données représente au moins une caractéristique d'usine associée à l'usine de traitement, dans laquelle la caractéristique d'usine indique au moins si l'usine de traitement inclut le nombre de mélangeurs qui est supérieur ou égal au nombre de produits simultanés,
dans lequel la génération de l'au moins un paramètre opérationnel optimisé utilisant le processus d'optimisation à court terme correspond à l'identifiant de données.

13. Procédé mis en œuvre par ordinateur selon la revendication 1, comprenant en outre :
la cause d'une configuration d'un programme de levage basé au moins en partie sur l'au moins un paramètre opérationnel optimisé.

14. Appareil pour générer au moins un paramètre opérationnel optimisé, comprenant au moins un processeur et au moins une mémoire contenant au moins une application qui, lors de son exécution par l'au moins un processeur, configure l'appareil pour mettre en œuvre le procédé mis en œuvre par ordinateur selon l'une quelconque des revendications 1 à 13.

15. Produit de programme informatique comprenant au moins un stockage non transitoire lisible par ordinateur, l'au moins un support de stockage non transitoire lisible par ordinateur contenant un code de programme informatique qui, en exécution par au moins un processeur, est configuré pour mettre en œuvre le procédé mis en œuvre par ordinateur selon l'une quelconque des revendications 1 à 13.
